# EUROPEAN PATENT APPLICATION

(11) **EP 2 863 629 A1**
(43) Date of publication of application: **22.04.2015**
(21) Application number: 13804466.4
(22) Date of filing: 07.06.2013
(51) Int. Cl.: H04N 7/00

(54) **VIDEO ENCODING DEVICE, VIDEO DECODING DEVICE, VIDEO ENCODING METHOD, VIDEO DECODING METHOD, AND PROGRAM**

(30) Priority: 14.06.2012 JP 2012135117
(71) Applicant: KDDI CORPORATION, Shinjuku-ku Tokyo 160-0023 (JP)
(72) Inventor: YOSHINO, Tomonobu, Fujimino-shi Saitama 356-8502 (JP); NAITO, Sei, Fujimino-shi Saitama 356-8502 (JP)
(74) Representative: Reeve, Nicholas Edward
(86) International application number: PCT/JP2013/065875
(87) International publication number: WO 2013/187334

(57) **Abstract**

A technique is provided for high-efficiency compression of multiple video images having the same image pattern generated in different video formats. A video encoding apparatus AA that performs scalable encoding of an input video image instructs a video format converting unit to convert the input video image into a video image in another video format so as to generate a converted video image. Furthermore, an encoding-side prediction unit predicts information lost in the operation of the video format converting unit for generating the converted video image. A first encoding unit encodes the input video image using predicted results obtained by the encoding-side prediction unit. A second encoding unit encodes a video image converted by the video format converting unit. A multiplexing unit multiplexes the encoded results obtained by the first and second encoding units so as to generate a compressed stream b having video format scalability.

## Description

### Technical Field

The present invention relates to a video encoding apparatus, a video decoding apparatus, a video encoding method, a video decoding method, and a computer program.

### Background Art

With conventional techniques, there are known methods for representing pixel values, each defined as a format for video signals such as YUV, RGB, etc. Furthermore, a color component sampling method is defined for each format. Moreover, each format is provided with multiple kinds of color component representation each having a different number of bits for representing color components.

A combination of the format, the sampling method, and the number of bits will be collectively referred to as a "video format" hereafter. Conversion between such video formats can be performed by means of pixel thinning, pixel interpolation, or the like.

It should be noted that examples of such formats include YUV, RGB, Lab, CMYK, and the like. Examples of such formats for YUV include YUV 4:4:4, YUV 4:2:2, and YUV 4:2:0. Here, "the number of bits" represents the number of bits required for each pixel.

With video compression encoding techniques as typified by H.264 (e.g., see non-patent document 1), a predetermined video format is applied to the input/output video image. Such an arrangement allows the video format to be selected according to the usage. The H.264 format is provided with a profile (SVC profile) which allows a scalable video stream to be generated. Examples of scalabilities defined in such a profile include resolution scalability.

### [Related Art Documents]

### [Patent Documents]

[Non-patent document 1]
Joint Video Team (JVT) of ISO/IEC MPEG and ITU-T VCEG, "Text of ISO/IEC 14496-10 Advanced Video Coding"

### Disclosure of Invention

### [Problems to be Solved by the Invention]

Such video compression encoding techniques as typified by H.264 have not been provided with scalability between different video formats. Accordingly, there is a need to generate a video stream for each different video format even if the same image pattern is converted. This leads to a difficulty in providing high-efficiency compression of multiple video images having the same image pattern but converted into different video formats.

The present invention has been made in order to solve such a problem. Accordingly, it is a purpose of the present invention to provide a technique for providing high-efficiency compression of multiple video images having the same image pattern but converted into different video formats.

### [Means for Solving the Problems]

The present invention proposes the following arrangements in order to solve the aforementioned problems.

(1) The present invention proposes a video encoding apparatus which is capable of performing scalable encoding of an input video image. The video encoding apparatus comprises: a video format converting unit that converts the input video image into a video image in a video format that differs from a video format of the input video image, so as to generate a converted video image; an encoding-side prediction unit that predicts information lost in an operation of the video format converting unit for generating the converted video image; a first encoding unit that encodes the input video image based on a prediction result obtained by the encoding-side prediction unit; a second encoding unit that encodes the converted video image generated by the video format converting unit; and a multiplexing unit that multiplexes an encoded result obtained by the first encoding unit and an encoded result obtained by the second encoding unit so as to generate compressed data having scalability with respect to the video format.

With the present invention, the video encoding apparatus configured to be capable of performing scalable encoding of an input video image includes a video format converting unit, an encoding-side prediction unit, a first encoding unit, a second encoding unit, and a multiplexing unit. With such an arrangement, the video format converting unit converts the input video image into a video image in a video format that differs from that of the input video image, so as to generate a converted video image. Furthermore, the encoding-side prediction unit predicts information lost in the operation of the video format converting unit for generating the converted video image. The first encoding unit encodes the input video image using a predicted result obtained by the encoding-side prediction unit. The second encoding unit encodes the converted video image generated by the video format converting unit. The multiplexing unit multiplexes the encoded result obtained by the first encoding unit and the encoded result obtained by the second encoding unit, so as to generate compressed data having scalability with respect to the video format.

A video image has a correlation or a pairwise relationship with respect to a change in the pixel value between the components. Thus, by performing inter-layer prediction based on inter-color-component prediction using such a correlation or pairwise relationship, such an arrangement is capable of predicting the color information with respect to an upper layer with high precision based on the video image of a lower layer. In a case in which video images having the same image pattern are configured in different video formats, such an arrangement is capable of compressing such video images into a single compressed data stream with high efficiency.

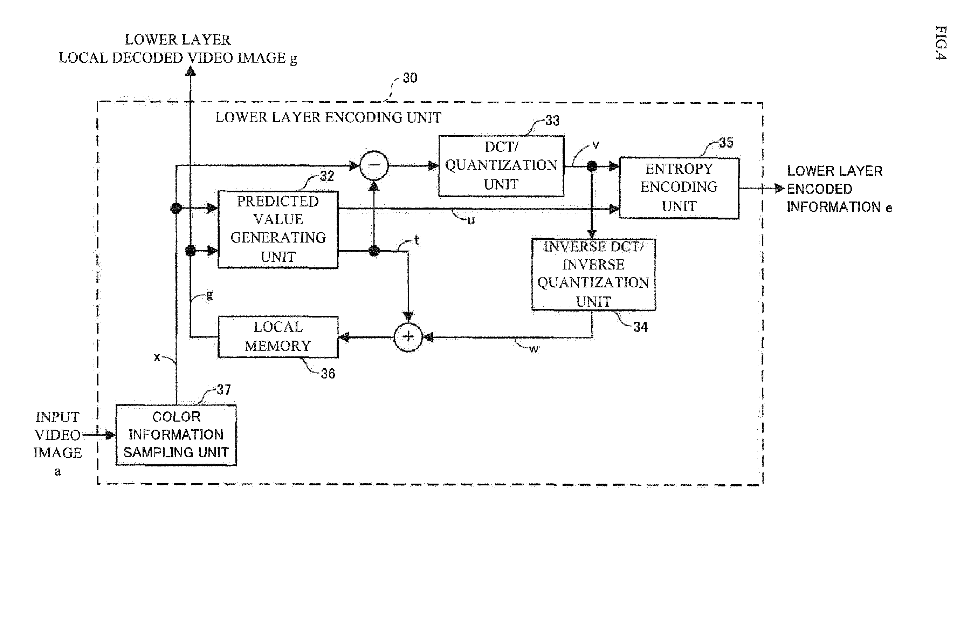

(2) The present invent proposes, with respect to the video encoding apparatus described in (1), that the video format converting unit (which corresponds to the color information sampling unit 37, for example) may generate, as the converted video image, a video image (which corresponds to the video image x of the lower layer shown in Fig. 4, for example) in the same format as that of the input video image (which corresponds to the input video image a shown in Fig. 4, for example) and in a video format having a smaller amount of color information than that of the input video image.

With the video encoding apparatus described in (1) according to the present invention, the video format converting unit may generate a video image in the same format as that of the input video image and in a video format having a smaller amount of color information than that of the input video image. Thus, by performing the inter-layer prediction based on the inter-color-component prediction using the aforementioned correlation between the components, such an arrangement provides the same effects and advantages as described above.

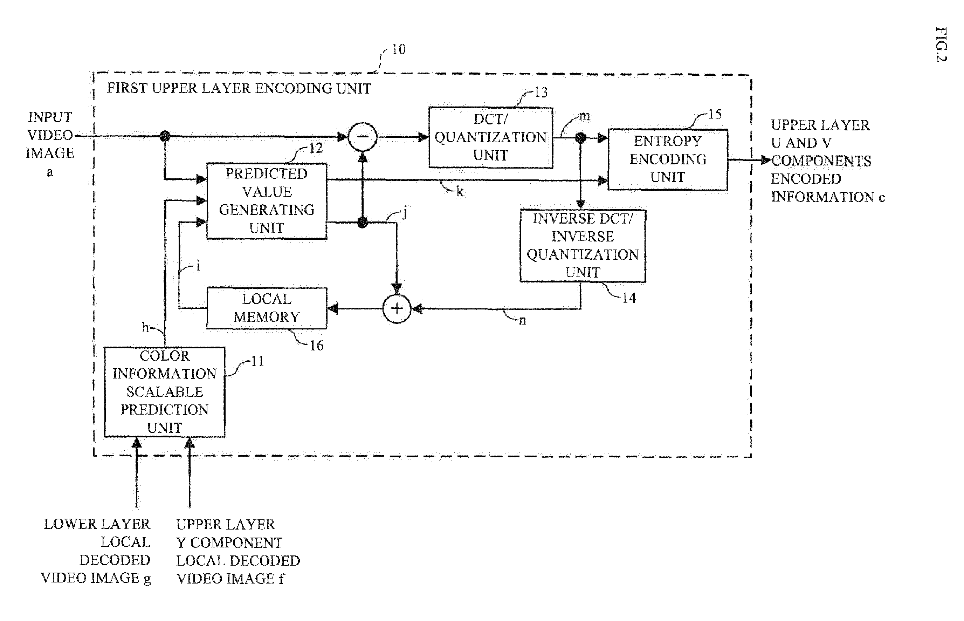

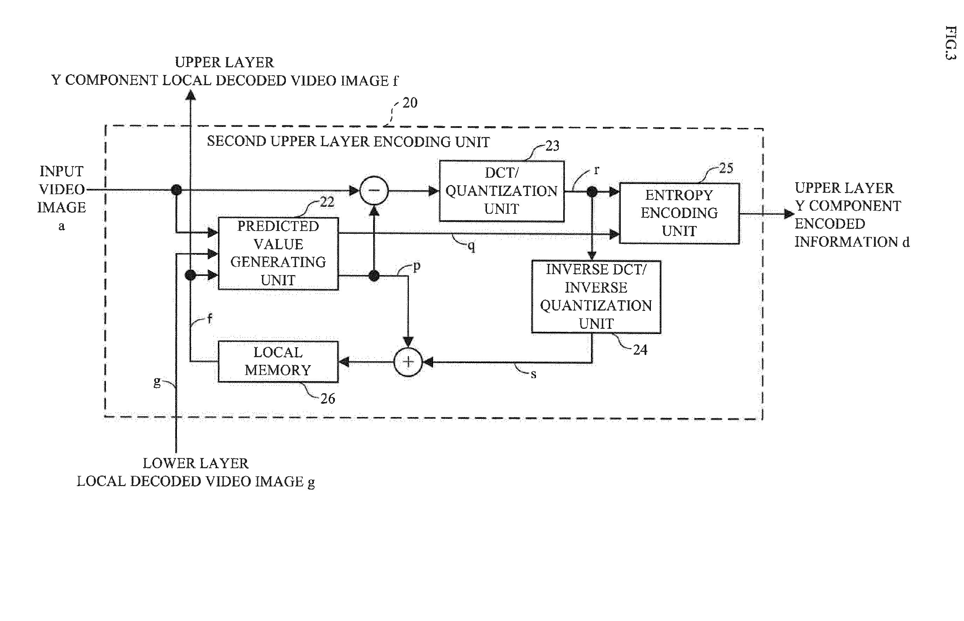

(3) The present invent proposes, with respect to the video encoding apparatus described in (2), that the first encoding unit (which corresponds to the entropy encoding unit 15 shown in Fig. 2 and the entropy encoding unit 25 shown in Fig. 3, for example) may encode a base layer using an existing standard method, and that the encoding-side prediction unit (which corresponds to the predicted value generating unit 12 shown in Fig. 2, for example) may predict the lost color information based on pixel values of a luminance component of a decoded image of the base layer.

With the video encoding apparatus described in (2) according to the present invention, the first encoding unit may encode the base layer using an existing standard method. Also, the encoding-side prediction unit may predict the lost color information based on the pixel values of a luminance component of a decoded image of the base layer. Thus, by performing inter-layer prediction based on the inter-color-component prediction using the correlation between the luminance and the color information, such an arrangement provides the same effects and advantages as described above.

(4) The present invent proposes, with respect to the video encoding apparatus described in (3), that the encoding-side prediction unit may generate a predicted value of a color difference component lost in an operation of the video format converting unit for generating the converted video image based on the input video image, by means of polynomial approximation using pixel values of a luminance component of a decoded image of the input video image and pixel values of a luminance component of a decoded image of the converted video image.

With the video encoding apparatus described in (3) according to the present invention, the encoding-side prediction unit may generate a predicted value of the color difference component lost in the operation of the video format converting unit for generating the converted video image by means of polynomial approximation using the pixel values of a luminance component of a decoded image of the input video image and the pixel values of a luminance component of a decoded image of the converted video image. Thus, by performing inter-layer prediction based on the color-component prediction using the correlation between the luminance and the color information, such an arrangement provides the same effects and advantages as described above.

(5) The present invent proposes, with respect to the video encoding apparatus described in (3), that the encoding-side prediction unit may generate a predicted value of a color difference component lost in an operation of the video format converting unit for generating the converted video image based on the input video image, by means of an interpolation filter that provides a minimum error in processing target pixel values using pixel values of a luminance component of a decoded image of the input video image and pixel values of a luminance component of a decoded image of the converted video image.

With the video encoding apparatus described in (3) according to the present invention, the encoding-side prediction unit may generate a predicted value of the color difference component lost in the operation of the video format converting unit for generating the converted video image based on the input video image by means of an interpolation filter that provides a minimum error in the processing target pixel values using the pixel values of a luminance component of a decoded image of the input video image and the pixel values of a luminance component of a decoded image of the converted video image. Thus, by performing the inter-layer prediction based on the inter-color-component prediction using the correlation between the luminance and the color information, such an arrangement provides the same effects and advantages as described above.

(6) The present invent proposes, with respect to the video encoding apparatus described in (3), that the encoding-side prediction unit may generate a predicted value of a color difference component lost in an operation of the video format converting unit for generating the converted video image based on the input video image, by means of nonlinear interpolation processing using pixel values of a luminance component of a decoded image of the input video image and pixel values of a luminance component of a decoded image of the converted video image.

With the video encoding apparatus described in (3) according to the present invention, the encoding-side prediction unit may generate a predicted value of the color difference component lost in the operation of the video format converting unit for generating the converted video image based on the input video image by means of nonlinear interpolation processing using the pixel values of a luminance component of a decoded image of the input video image and the pixel values of a luminance component of a decoded image of the converted video image. Thus, by performing the inter-layer prediction based on the inter-color-component prediction using the correlation between the luminance and the color information, such an arrangement provides the same effects and advantages as described above.

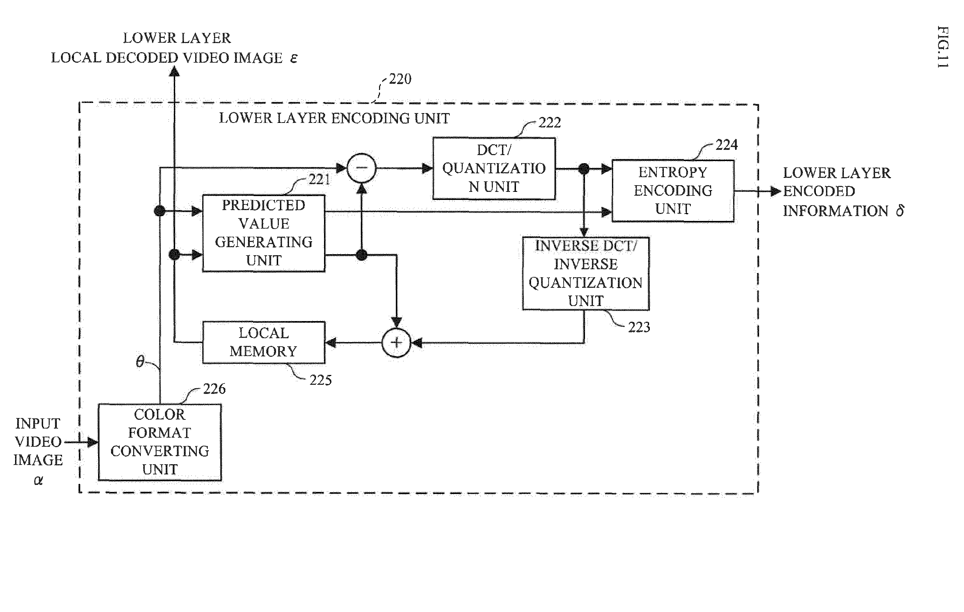

(7) The present invent proposes, with respect to the video encoding apparatus described in (1), that the video format converting unit (which corresponds to the color format converting unit 226 shown in Fig. 11, for example) may generate, as the converted video image, a video image (which corresponds to the converted video image θ shown in Fig. 11, for example) in a format that differs from that of the input video image (which corresponds to the input video image α shown in Fig. 11, for example), and in a video format having a smaller amount of data per pixel than that of the input video image.

With the video encoding apparatus described in (1) according to the present invention, the video format converting unit may generate, as the converted video image, a video image in a format that differs from that of the input video image and in a video format having a smaller data amount per pixel than that of the input video image. Thus, by performing the inter-layer prediction based on the inter-color-component prediction using the pairwise relationship between the components, such an arrangement provides the same effects and advantages as described above.

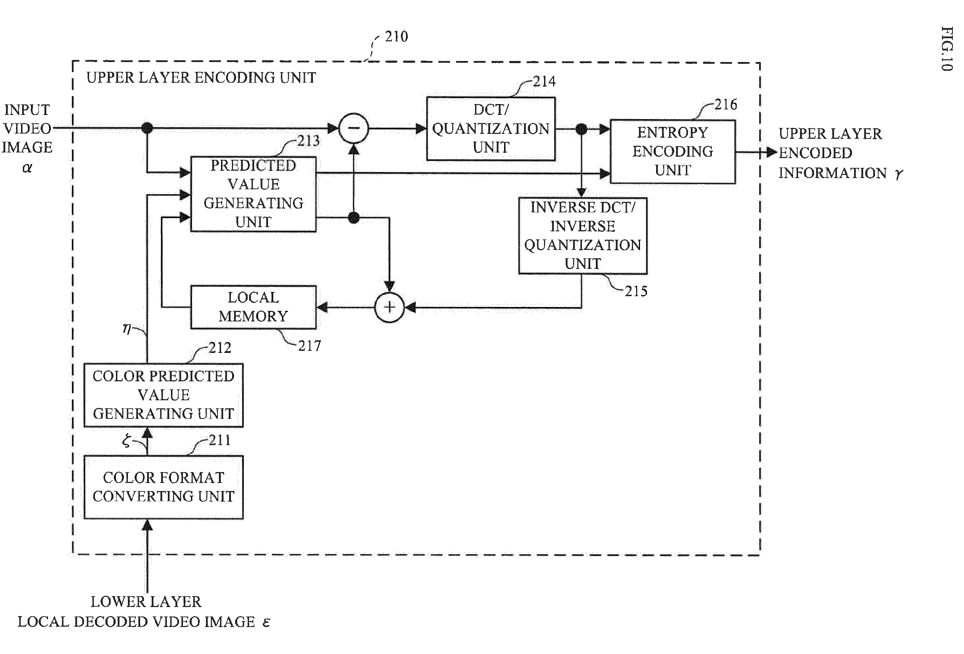

(8) The present invent proposes, with respect to the video encoding apparatus described in (7), that the first encoding unit (which corresponds to the entropy encoding unit 216 shown in Fig. 10, for example) may encode a base layer using an existing standard method, and that the encoding-side prediction unit (which corresponds to the predicted value generating unit 213 shown in Fig. 10, for example) may predict the lost information based on pixel values of one component from among multiple components that form a decoded image of the base layer.

With the video encoding apparatus described in (7) according to the present invention, the first encoding unit may encode the base layer using an existing standard method. Also, the encoding-side prediction unit may predict the lost information based on the pixel values of one component from among the multiple components that form a decoded image of the base layer. Thus, by performing inter-layer prediction based on inter-color-component prediction using a particular pairwise relationship between predetermined components, e.g., using the pairwise relationship between the Y component in the YUV format and the G component in the RGB format, such an arrangement provides the same effects and advantages as described above.

(9) The present invent proposes, with respect to the video encoding apparatus described in (8), that there is a pairwise relationship between a particular component (which corresponds to the G component in the RGB format as described later, for example) that is one component from among multiple components that form a decoded image of the input video image and a predetermined component (which corresponds to the Y component in the YUV format as described later, for example) that is one component from among multiple components that form a decoded image of the converted video image, and that the encoding-side prediction unit may generate a predicted value of a component lost in an operation of the video format converting unit for generating the converted video image based on the input video image, by means of polynomial approximation using pixel values of the particular component of a decoded image of the input video image and pixel values of the predetermined component of a decoded image of the converted video image.

With the video encoding apparatus described in (8) according to the present invention, there is a pairwise relationship between a particular component which is one from among the multiple components that form a decoded image of the input video image and a predetermined component which is one from among the multiple components that form a decoded image of the converted video image. With such an arrangement, the encoding-side prediction unit may generate a predicted value of the component lost in the operation of the video format converting unit for generating the converted video image based on the input video image by means of polynomial approximation using the pixel values of the particular component of the decoded image of the input video image and the pixel values of the predetermined component of the decoded image of the converted video image. Thus, by performing inter-layer prediction based on inter-color-component prediction using a pairwise relationship between the predetermined components, e.g., using the pairwise relationship between the Y component in the YUV format and the G component in the RGB format, such an arrangement provides the same effects and advantages as described above.

(10) The present invent proposes, with respect to the video encoding apparatus described in (8), that there is a pairwise relationship between a particular component (which corresponds to the G component in the RGB format as described later, for example) that is one component from among multiple components that form a decoded image of the input video image and a predetermined component (which corresponds to the Y component in the YUV format as described later, for example) that is one component from among multiple components that form a decoded image of the converted video image, and that the encoding-side prediction unit may generate a predicted value of a component lost in an operation of the video format converting unit for generating the converted video image based on the input video image, by means of an interpolation filter that provides a minimum error in processing target pixel values using pixel values of the particular component of a decoded image of the input video image and pixel values of the predetermined component of a decoded image of the converted video image.

With the video encoding apparatus described in (8) according to the present invention, there is a pairwise relationship between a particular component which is one from among the multiple components that form a decoded image of the input video image and a predetermined component which is one from among the multiple components that form a decoded image of the converted video image. With such an arrangement, the encoding-side prediction unit may generate a predicted value of the component lost in the operation of the video format converting unit for generating the converted video image based on the input video image by means of an interpolation filter that provides a minimum error in the processing target pixel values using the pixel values of the particular component of a decoded image of the input video image and the pixel values of the predetermined component of a decoded image of the converted video image. Thus, by performing inter-layer prediction based on inter-color-component prediction using the pairwise relationship between the predetermined components, e.g., using a pairwise relationship between the Y component in the YUV format and the G component in the RGB format, such an arrangement provides the same effects and advantages as described above.

(11) The present invent proposes, with respect to the video encoding apparatus described in (8), that there is a pairwise relationship between a particular component which corresponds to the G component in the RGB format as described later, for example) that is one component from among multiple components that form a decoded image of the input video image and a predetermined component (which corresponds to the Y component in the YUV format as described later, for example) that is one component from among multiple components that form a decoded image of the converted video image, and that the encoding-side prediction unit may generate a predicted value of a component lost in an operation of the video format converting unit for generating the converted video image based on the input video image, by means of nonlinear interpolation processing using pixel values of the particular component of a decoded image of the input video image and pixel values of the predetermined component of a decoded image of the converted video image.

With the video encoding apparatus described in (8) according to the present invention, there is a pairwise relationship between a particular component which is one from among the multiple components that form a decoded image of the input video image and a predetermined component which is one from among the multiple components that form a decoded image of the converted video image. With such an arrangement, the encoding-side prediction unit may generate a predicted value of the component lost in the operation of the video format converting unit for generating the converted video image based on the input video image by means of nonlinear interpolation processing using the pixel values of the particular component of a decoded image of the input video image and the pixel values of the predetermined component of a decoded image of the converted video image. Thus, by performing inter-layer prediction based on inter-color-component prediction using a pairwise relationship between the predetermined components, e.g., using a pairwise relationship between the Y component in the YUV format and the G component in the RGB format, such an arrangement provides the same effects and advantages as described above.

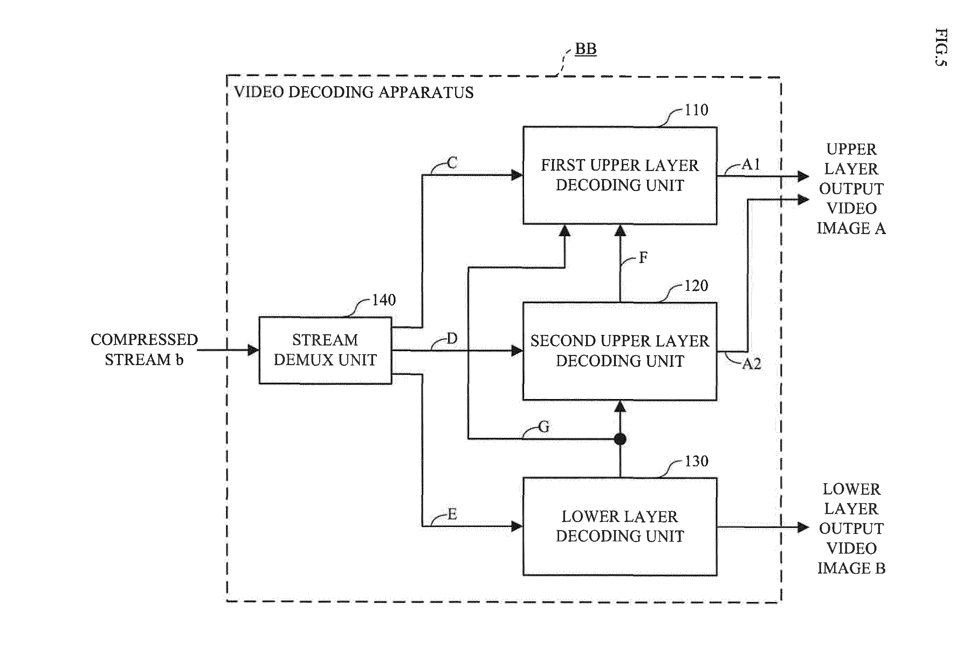

(12) The present invention proposes a video decoding apparatus which is capable of performing scalable decoding of compressed data (which corresponds to the compressed stream b shown in Fig. 5, for example) generated by the video encoding apparatus described in (1) through (6). The video decoding apparatus comprises: a demultiplexing unit that acquires an encoded result of a video image for each video format from the compressed data; a decoding unit that decodes the encoded result acquired for each video format by the demultiplexing unit; a decoding-side prediction unit that predicts information lost in an operation of the video format converting unit for generating the converted video image based on the input video image; a first video output unit that calculates the input video image based on a video image decoded by the decoding unit and a prediction result obtained by the decoding-side prediction unit; and a second video output unit that calculates the converted video image based on a video image decoded by the decoding unit.

With the present invention, a video decoding apparatus configured to be capable of performing scalable decoding of compressed data generated by the video encoding apparatus described in (1) through (6) includes a demultiplexing unit, a decoding unit, a decoding-side prediction unit, a first video output unit, and a second video output unit. With such an arrangement, the demultiplexing unit acquires a video encoded result for each video format from the compressed data. Furthermore, the decoding unit decodes the encoded result for each video format thus acquired by the demultiplexing unit. The decoding-side prediction unit predicts the information lost in the operation of the video format converting unit for generating the converted video image based on the input video image. The first video output unit calculates the input video image based on the video image decoded by the decoding unit and the predicted result obtained by the decoding-side prediction unit. The second video output unit calculates the converted video image based on the video image decoded by the decoding unit.

In some cases, a video image has a correlation with respect to a change in the pixel values between the components. Thus, by performing inter-layer prediction based on inter-color-component prediction using the correlation, such an arrangement is capable of predicting the color information with respect to the upper layer with high precision based on the video image of the lower layer. In a case in which a single compressed data stream comprises video images having the same image pattern in different video formats, such an arrangement is capable of generating such video images with high efficiency by decoding such a single compressed data stream.

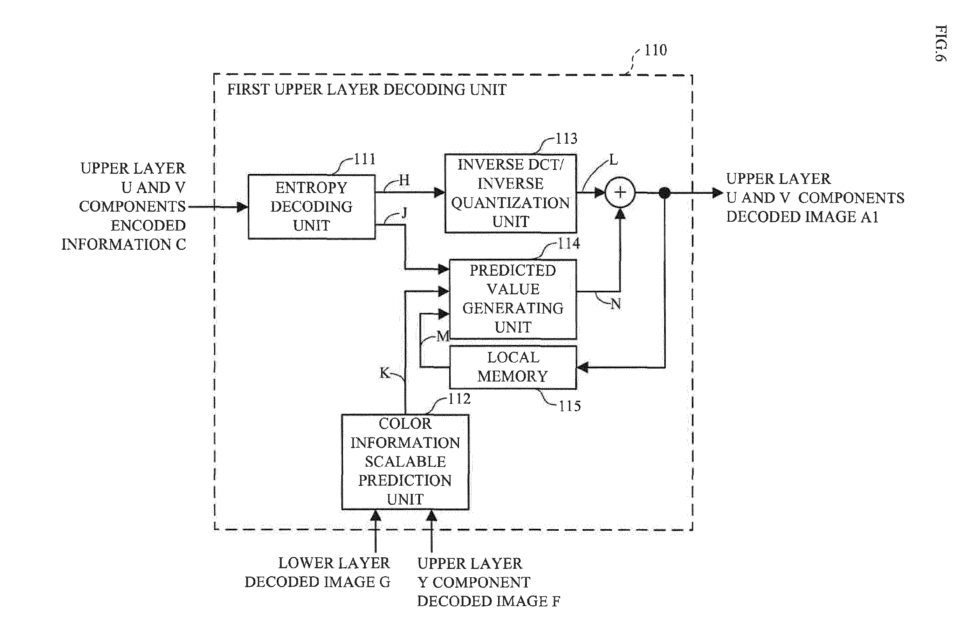

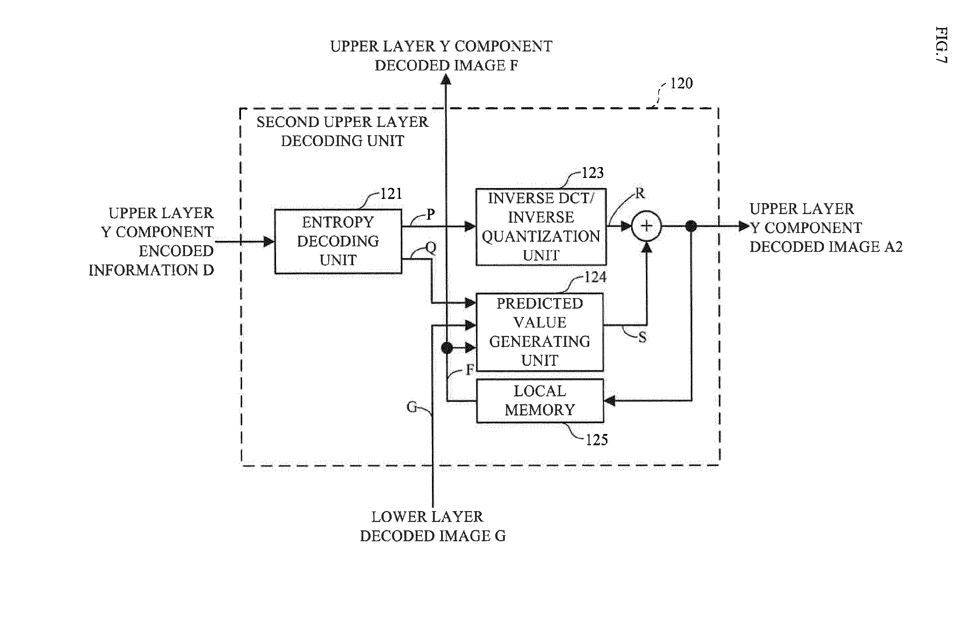

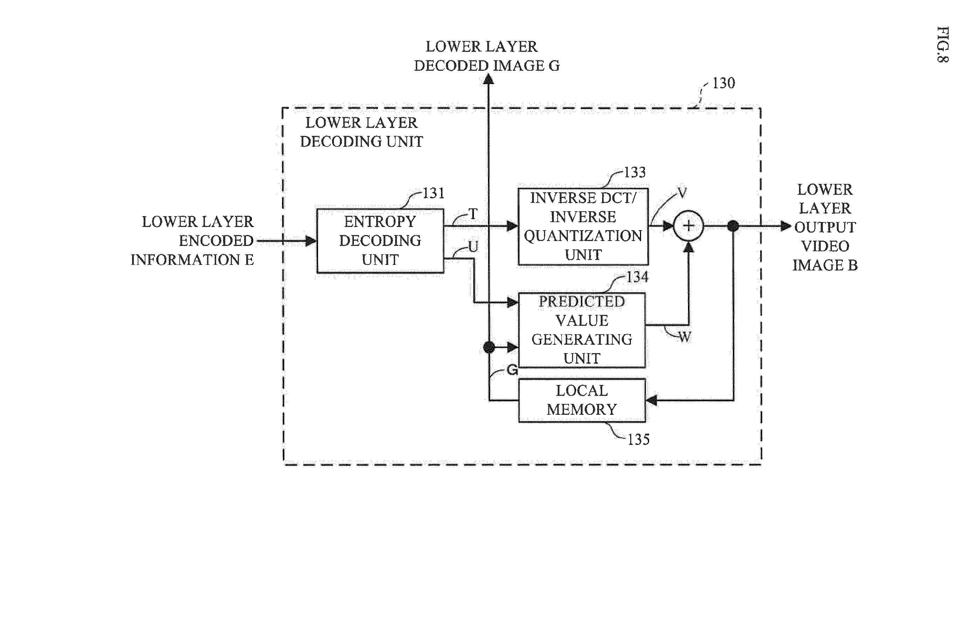

(13) The present invent proposes, with respect to the video decoding apparatus described in (12), that the decoding unit (which corresponds to the entropy decoding unit 111 shown in Fig. 6, the entropy decoding unit 121 shown in Fig. 7, and the entropy decoding unit 131 shown in Fig. 8, for example) may decode an encoded result of the base layer encoded using an existing standard method and decodes an encoded result of an enhancement layer, which is acquired by the demultiplexing unit (which corresponds to the stream DEMUX unit 140 shown in Fig. 5, for example) from encoded results as a layer that differs from the base layer, and that the decoding-side prediction unit (which corresponds to the predicted value generating unit 114 shown in Fig. 6, for example) may predict the lost color information based on pixel values of a luminance component of a decoded image of the base layer.

With the video decoding apparatus described in (12) according to the present invention, the decoding unit may decode the encoded result of the base layer encoded using an existing standard method, and decode the encoded result of the enhancement layer, which is acquired by the demultiplexing unit from the encoded result as a layer that differs from the base layer. Also, the decoding-side prediction unit may predict the lost color information based on the pixel values of a luminance component of a decoded image of the base layer. Thus, by performing inter-layer prediction based on inter-color-component prediction using the correlation between the luminance and the color information, such an arrangement provides the same effects and advantages as described above.

(14) The present invent proposes, with respect to the video decoding apparatus described in (13), that the decoding-side prediction unit may generate a predicted value of a color difference component lost in an operation of the video format converting unit for generating the converted video image based on the input video image, by means of polynomial approximation using pixel values of a luminance component of a decoded image of the base layer and pixel values of a luminance component of a decoded image of the enhancement layer.

With the video decoding apparatus described in (13) according to the present invention, the decoding-side prediction unit may generate a predicted value of the color difference component lost in the operation of the video format converting unit for generating the converted video image based on the input video image by means of polynomial approximation using the pixel values of a luminance component of a decoded image of the base layer and the pixel values of a luminance component of a decoded image of the enhancement layer. Thus, by performing inter-layer prediction based on the color-component prediction using the correlation between the luminance and the color information, such an arrangement provides the same effects and advantages as described above.

(15) The present invent proposes, with respect to the video decoding apparatus described in (13), that the decoding-side prediction unit may generate a predicted value of a color difference component lost in an operation of the video format converting unit for generating the converted video image based on the input video image, by means of an interpolation filter that provides a minimum error in processing target pixel values using pixel values of a luminance component of a decoded image of the base layer and pixel values of a luminance component of a decoded image of the enhancement layer.

With the video decoding apparatus described in (13) according to the present invention, the decoding-side prediction unit may generate a predicted value of the color difference component lost in the operation of the video format converting unit for generating the converted video image based on the input video image by means of an interpolation filter that provides a minimum error in the processing target pixel values using the pixel values of a luminance component of a decoded image of the base layer and the pixel values of a luminance component of a decoded image of the enhancement layer. Thus, by performing the inter-layer prediction based on the inter-color-component prediction using the correlation between the luminance and the color information, such an arrangement provides the same effects and advantages as described above.

(16) The present invent proposes, with respect to the video decoding apparatus described in (13), that the decoding-side prediction unit may generate a predicted value of a color difference component lost in an operation of the video format converting unit for generating the converted video image based on the input video image, by means of nonlinear interpolation processing using pixel values of a luminance component of a decoded image of the base layer and pixel values of a luminance component of a decoded image of the enhancement layer.

With the video decoding apparatus described in (13) according to the present invention, the decoding-side prediction unit may generate a predicted value of the color difference component lost in the operation of the video format converting unit for generating the converted video image based on the input video image by means of nonlinear interpolation processing using the pixel values of a luminance component of a decoded image of the base layer and the pixel values of a luminance component of a decoded image of the enhancement layer. Thus, by performing the inter-layer prediction based on the inter-color-component prediction using the correlation between the luminance and the color information, such an arrangement provides the same effects and advantages as described above.

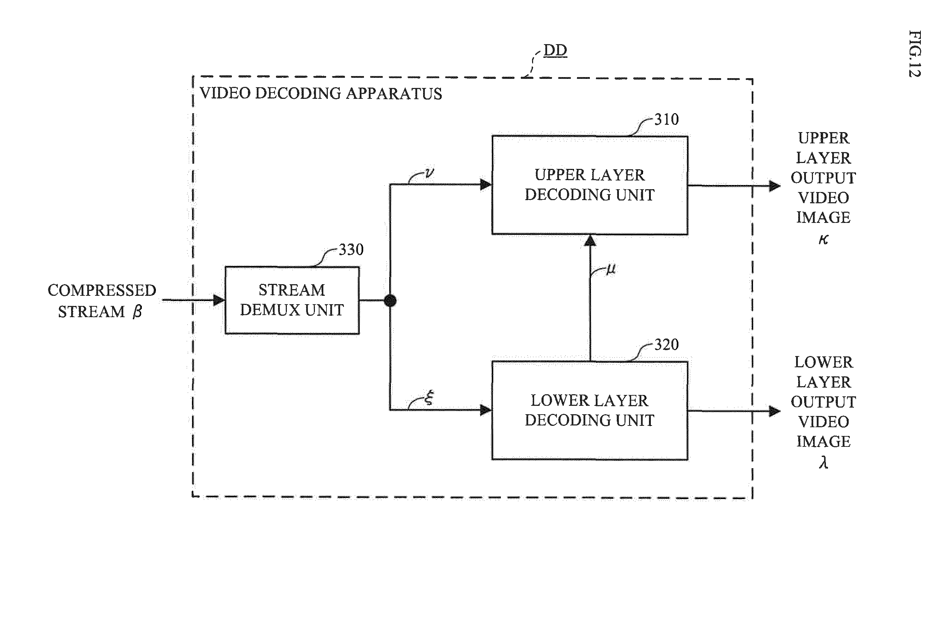

(17) The present invention proposes a video decoding apparatus which is capable of performing scalable decoding of compressed data (which corresponds to the compressed stream β shown in Fig. 12, for example) generated by the video encoding apparatus described in (1) and (7) through (11). The video decoding apparatus comprises: a demultiplexing unit that acquires an encoded result of a video image for each video format from the compressed data; a decoding unit that decodes the encoded result acquired for each video format by the demultiplexing unit; a decoding-side prediction unit that predicts information lost in an operation of the video format converting unit for generating the converted video image based on the input video image; a first video output unit that calculates the input video image based on a video image decoded by the decoding unit and a prediction result obtained by the decoding-side prediction unit; and a second video output unit that calculates the converted video image based on a video image decoded by the decoding unit.

With the present invention, a video decoding apparatus configured to be capable of performing scalable decoding of compressed data generated by the video encoding apparatus described in (1) and (7) through (11) includes a demultiplexing unit, a decoding unit, a decoding-side prediction unit, a first video output unit, and a second video output unit. With such an arrangement, the demultiplexing unit acquires a video encoded result for each video format from the compressed data. Furthermore, the decoding unit decodes the encoded result for each video format thus acquired by the demultiplexing unit. The decoding-side prediction unit predicts the information lost in the operation of the video format converting unit for generating the converted video image based on the input video image. The first video output unit calculates the input video image based on the video image decoded by the decoding unit and the prediction result obtained by the decoding-side prediction unit. The second video output unit calculates the converted video image based on the video image decoded by the decoding unit.

In some cases, a video image has a pairwise relationship between particular components. Thus, by performing inter-layer prediction based on inter-color-component prediction using the pairwise relationship, such an arrangement is capable of predicting the color information with respect to the upper layer with high precision based on the video image of the lower layer. Thus, in a case in which a single compressed data stream comprises video images having the same image pattern in different video formats, such an arrangement is capable of generating such video images by decoding such a single compressed data stream.

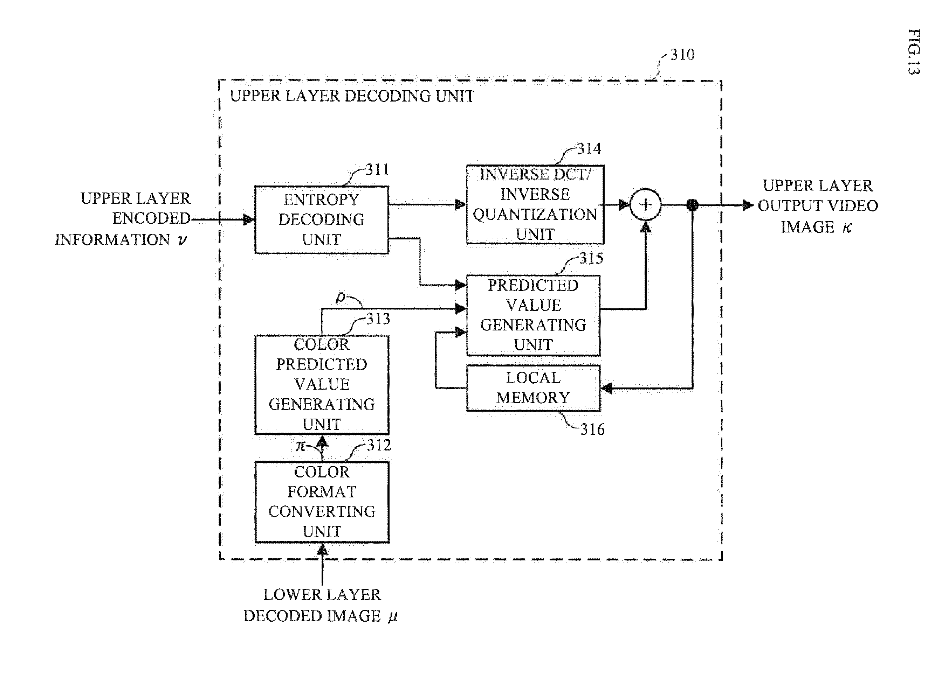

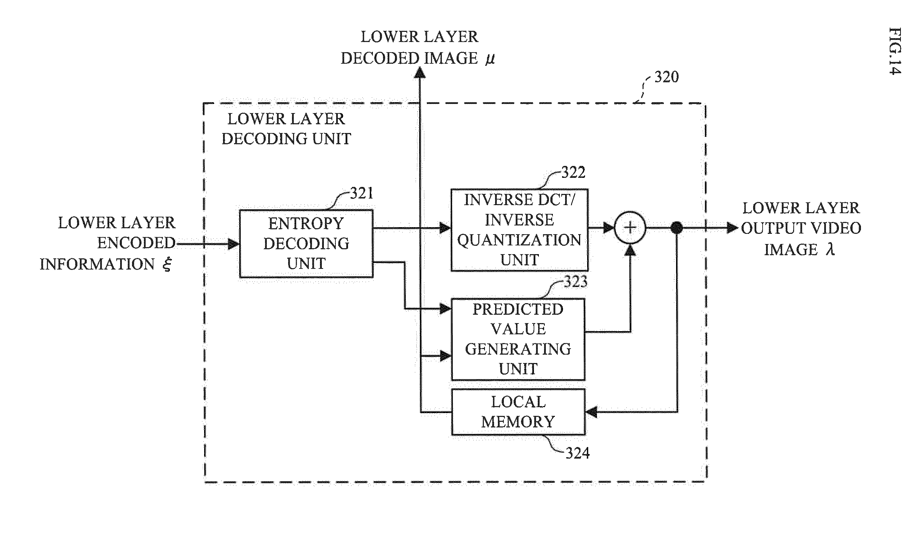

(18) The present invent proposes, with respect to the video decoding apparatus described in (17), that the decoding unit (which corresponds to the entropy decoding unit 311 shown in Fig. 13 and the entropy decoding unit 321 shown in Fig. 14, for example) may decode an encoded result of the base layer encoded using an existing standard method and decodes an encoded result of an enhancement layer, which is acquired by the demultiplexing unit (which corresponds to the stream DEMUX unit 330 shown in Fig. 12, for example) from encoded results as a layer that differs from the base layer, and that the decoding-side prediction unit (which corresponds to the predicted value generating unit 315 shown in Fig. 13, for example) may predict the lost information based on pixel values of the particular component of a decoded image of the base layer.

With the video decoding apparatus described in (17) according to the present invention, the decoding unit may decode the encoded result of the base layer encoded using an existing standard method and the encoded result of the enhancement layer, which is acquired by the demultiplexing unit from the encoded results as a layer that differs from the base layer. Also, the decoding-side prediction unit may predict the lost information based on the pixel values of the particular component of a decoded image of the base layer. Thus, by performing inter-layer prediction based on inter-color-component prediction using the pairwise relationship between the predetermined components, e.g., using a pairwise relationship between the Y component in the YUV format and the G component in the RGB format, such an arrangement provides the same effects and advantages as described above.

(19) The present invent proposes, with respect to the video decoding apparatus described in (18), that the decoding-side prediction unit may generate a predicted value of a component lost in an operation of the video format converting unit for generating the converted video image based on the input video image, by means of polynomial approximation using pixel values of the particular component of a decoded image of the base layer and pixel values of the predetermined component of a decoded image of the enhancement layer.

With the video encoding apparatus described in (18) according to the present invention, the decoding-side prediction unit may generate a predicted value of a component lost in the operation of the video format converting unit for generating the converted video image based on the input video image by means of polynomial approximation using the pixel values of the particular component of a decoded image of the base layer and the pixel values of the predetermined component of a decoded image of the enhancement layer. Thus, by performing inter-layer prediction based on inter-color-component prediction using a pairwise relationship between the predetermined components, e.g., using a pairwise relationship between the Y component in the YUV format and the G component in the RGB format, such an arrangement provides the same effects and advantages as described above.

(20) The present invent proposes, with respect to the video decoding apparatus described in (18), that the decoding-side prediction unit may generate a predicted value of a component lost in an operation of the video format converting unit for generating the converted video image based on the input video image, by means of an interpolation filter that provides a minimum error in processing target pixel values using pixel values of the particular component of a decoded image of the base layer and pixel values of the predetermined component of a decoded image of the enhancement layer.

With the video encoding apparatus described in (18) according to the present invention, the decoding-side prediction unit may generate a predicted value of a component lost in the operation of the video format converting unit for generating the converted video image based on the input video image by means of an interpolation filter that provides a minimum error in the processing target pixel values using the pixel values of the particular component of a decoded image of the base layer and the pixel values of the predetermined component of the enhancement layer. Thus, by performing inter-layer prediction based on inter-color-component prediction using a pairwise relationship between the predetermined components, e.g., using a pairwise relationship between the Y component in the YUV format and the G component in the RGB format, such an arrangement provides the same effects and advantages as described above.

(21) The present invent proposes, with respect to the video decoding apparatus described in (18), that the decoding-side prediction unit may generate a predicted value of a component lost in an operation of the video format converting unit for generating the converted video image based on the input video image, by means of nonlinear interpolation processing using pixel values of the particular component of a decoded image of the base layer and pixel values of the predetermined component of a decoded image of the enhancement layer.

With the video encoding apparatus described in (18) according to the present invention, the decoding-side prediction unit may generate a predicted value of the component lost in the operation of the video format converting unit for generating the converted video image based on the input video image by means of nonlinear interpolation processing using the pixel values of the particular component of a decoded image of the base layer and the pixel values of the predetermined component of a decoded image of the enhancement layer. Thus, by performing inter-layer prediction based on inter-color-component prediction using a pairwise relationship between the predetermined components, e.g., using a pairwise relationship between the Y component in the YUV format and the G component in the RGB format, such an arrangement provides the same effects and advantages as described above.

(22) The present invent proposes a video encoding method used by a video encoding apparatus comprising a video format converting unit, an encoding-side prediction unit, a first encoding unit, a second encoding unit, and a multiplexing unit, and configured to be capable of performing scalable encoding of an input video image. The video encoding method comprises: a first step in which the video format converting unit converts the input video image into a video image in a video format that differs from a video format of the input video image, so as to generate a converted video image; a second step in which the encoding-side prediction unit predicts information lost in an operation of the video format converting unit for generating the converted video image; a third step in which the first encoding unit encodes the input video image using a predicted result obtained by the encoding-side prediction unit; a fourth step in which the second encoding unit encodes a video image converted by the video format converting unit; and a fifth step in which the multiplexing unit multiplexes an encoded result obtained by the first encoding unit and an encoded result obtained by the second encoding unit, so as to generate compressed data having scalability with respect to the video format.

With the present invention, the video format converting unit converts an input video image into a video image in a video format that differs from that of the input video image, so as to generate a converted video image. Furthermore, the encoding-side prediction unit predicts the information lost in the operation of the video format converting unit for generating the converted video image. The first encoding unit encodes the input video image based on the prediction result obtained by the encoding-side prediction unit. The second encoding unit encodes the video image converted by the video format converting unit. The multiplexing unit multiplexes the encoded result obtained by the first encoding unit and the encoded result obtained by the second encoding unit, so as to generate compressed data having scalability with respect to the video format.

A video image has a correlation or a pairwise relationship with respect to a change in the pixel value between particular components. Thus, by performing inter-layer prediction based on inter-color-component prediction using such a correlation or pairwise relationship, such an arrangement is capable of predicting the color information with respect to the upper layer with high precision based on the video image of the lower layer. Thus, in a case in which the video image of the upper layer and the video image of the lower layer each having the same image pattern are configured in different video formats, such an arrangement is capable of compressing such video images into a single compressed data stream with high efficiency.

(23) The present invent proposes a video decoding method used by a video decoding apparatus comprising a demultiplexing unit, a decoding unit, a decoding-side prediction unit, a first video output unit, and a second video output unit, and configured to be capable of performing scalable decoding of compressed data generated by the video encoding apparatus described in (22). The video decoding method comprises: a sixth step in which the demultiplexing unit acquires a video encoded result for each video format from the compressed data; a seventh step in which the decoding unit decodes the encoded result for each video format acquired by the demultiplexing unit; an eighth step in which the decoding-side prediction unit predicts information lost in an operation of the video format converting unit for generating the converted video image based on the input video image; a ninth step in which the first video output unit calculates the input video image based on a video image decoded by the decoding unit and a predicted result obtained by the decoding-side prediction unit; and a tenth step in which the second video output unit calculates the converted video image based on a video image decoded by the decoding unit.

With the present invention, the demultiplexing unit acquires a video encoded result for each video format from the compressed data. Furthermore, the decoding unit decodes the encoded result for each video format thus acquired by the demultiplexing unit. The decoding-side prediction unit predicts the information lost in the operation of the video format converting unit for generating the converted video image based on the input video image. The first video output unit calculates the input video image based on the video image decoded by the decoding unit and the prediction result obtained by the decoding-side prediction unit. The second video output unit calculates the converted video image based on the video image decoded by the decoding unit.

A video image has a correlation or a pairwise relationship with respect to a change in the pixel values between particular components. Thus, by performing inter-layer prediction based on inter-color-component prediction using such a correlation or pairwise relationship, such an arrangement is capable of predicting the color information with respect to the upper layer with high prediction based on the video image of the lower layer. Thus, in a case in which a single compressed data stream comprises video images having the same image pattern in different video formats, such an arrangement is capable of generating such video images by decoding such a single compressed data stream.

(24) The present invent proposes a computer program configured to instruct a computer to execute a video encoding method used by a video encoding apparatus comprising a video format converting unit, an encoding-side prediction unit, a first encoding unit, a second encoding unit, and a multiplexing unit, and configured to be capable of performing scalable encoding of an input video image. The video encoding method comprises: a first step in which the video format converting unit converts the input video image into a video image in a video format that differs from a video format of the input video image, so as to generate a converted video image; a second step in which the encoding-side prediction unit predicts information lost in an operation of the video format converting unit for generating the converted video image; a third step in which the first encoding unit encodes the input video image using a predicted result obtained by the encoding-side prediction unit; a fourth step in which the second encoding unit encodes a video image converted by the video format converting unit; and a fifth step in which the multiplexing unit multiplexes an encoded result obtained by the first encoding unit and an encoded result obtained by the second encoding unit, so as to generate compressed data having scalability with respect to the video format.

With the present invention, the video format converting unit converts an input video image into a video image in a video format that differs from that of the input video image, so as to generate a converted video image. Furthermore, the encoding-side prediction unit predicts the information lost in the operation of the video format converting unit for generating the converted video image. The first encoding unit encodes the input video image based on the prediction result obtained by the encoding-side prediction unit. The second encoding unit encodes the video image converted by the video format converting unit. The multiplexing unit multiplexes the encoded result obtained by the first encoding unit and the encoded result obtained by the second encoding unit, so as to generate the compressed data having scalability with respect to the video format.

A video image has a correlation or a pairwise relationship with respect to a change in the pixel value between particular components. Thus, by performing inter-layer prediction based on inter-color-component prediction using such a correlation or pairwise relationship, such an arrangement is capable of predicting the color information with respect to the upper layer with high precision based on the video image of the lower layer. Thus, in a case in which the video image of the upper layer and the video image of the lower layer each having the same image pattern are configured in different video formats, such an arrangement is capable of compressing such video images into a single compressed data stream with high efficiency.

(25) The present invent proposes a computer program configured to instruct a computer to execute a video decoding method used by a video decoding apparatus comprising a demultiplexing unit, a decoding unit, a decoding-side prediction unit, a first video output unit, and a second video output unit, and configured to be capable of performing scalable decoding of compressed data generated by the video encoding apparatus described in (24). The video decoding method comprises: a sixth step in which the demultiplexing unit acquires a video encoded result for each video format from the compressed data; a seventh step in which the decoding unit decodes the encoded result for each video format acquired by the demultiplexing unit; an eighth step in which the decoding-side prediction unit predicts information lost in an operation of the video format converting unit for generating the converted video image based on the input video image; a ninth step in which the first video output unit calculates the input video image based on a video image decoded by the decoding unit and a predicted result obtained by the decoding-side prediction unit; and a tenth step in which the second video output unit calculates the converted video image based on a video image decoded by the decoding unit.

With the present invention, the demultiplexing unit acquires a video encoded result for each video format from the compressed data. Furthermore, the decoding unit decodes the encoded result for each video format thus acquired by the demultiplexing unit. The decoding-side prediction unit predicts the information lost in the operation of the video format converting unit for generating the converted video image based on the input video image. The first video output unit calculates the input video image based on the video image decoded by the decoding unit and the prediction result obtained by the decoding-side prediction unit. The second video output unit calculates the converted video image based on the video image decoded by the decoding unit.

A video image has a correlation or a pairwise relationship with respect to a change in the pixel values between particular components. Thus, by performing inter-layer prediction based on inter-color-component prediction using such a correlation or pairwise relationship, such an arrangement is capable of predicting the color information with respect to the upper layer with high prediction based on the video image of the lower layer. Thus, in a case in which a single compressed data stream comprises video images having the same image pattern in different video formats, such an arrangement is capable of generating such video images by decoding such a single compressed data stream.

### [Advantages]

With the present invention, such an arrangement is capable of compressing, with high efficiency, multiple video images having the same image pattern but configured in different video formats.

### Brief Description of the Drawings

Fig. 1 is a block diagram showing a configuration of a video encoding apparatus according to a first embodiment of the present invention.
Fig. 2 is a block diagram showing a configuration of a first upper layer encoding unit provided to the video encoding apparatus.
Fig. 3 is a block diagram showing a configuration of a second upper layer encoding unit provided to the video encoding apparatus.
Fig. 4 is a block diagram showing a configuration of a lower layer encoding unit provided to the video encoding apparatus.
Fig. 5 is a block diagram showing a configuration of a video decoding apparatus according to a first embodiment of the present invention.
Fig. 6 is a block diagram showing a first upper layer decoding unit provided to the video decoding apparatus.
Fig. 7 is a block diagram showing a second upper layer decoding unit provided to the video decoding apparatus.
Fig. 8 is a block diagram showing a lower layer decoding unit provided to the video decoding apparatus.
Fig. 9 is a block diagram showing a configuration of a video encoding apparatus according to a second embodiment of the present invention.
Fig. 10 is a block diagram showing a configuration of an upper layer encoding unit provided to the video encoding apparatus.
Fig. 11 is a block diagram showing a configuration of a lower layer encoding unit provided to the video encoding apparatus.
Fig. 12 is a block diagram showing a configuration of a configuration of a video decoding apparatus according to a second embodiment of the present invention.
Fig. 13 is a block diagram showing a configuration of an upper layer decoding unit provided to the video decoding apparatus.
Fig. 14 is a block diagram showing a configuration of a lower layer decoding unit provided to the video decoding apparatus.

### Best Mode for Carrying Out the Invention

Description will be made below regarding embodiments of the present invention with reference to the drawings. It should be noted that each of the components of the following embodiments can be replaced by a different known component or the like as appropriate. Also, any kind of variation may be made including a combination with other known components. That is to say, the following embodiments described below do not intend to limit the content of the present invention described in the appended claims.

### [First embodiment]

### [Configuration and operation of video encoding apparatus AA]

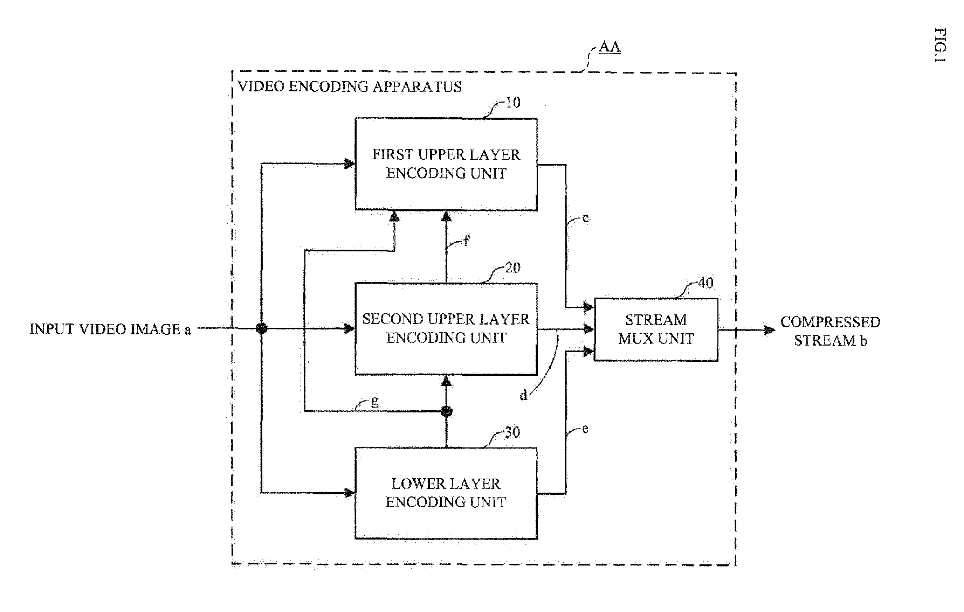

Fig. 1 is a block diagram showing a configuration of a video encoding apparatus AA according to a first embodiment of the present invention. The video encoding apparatus AA generates video images in two video formats based on an input video image a, multiplexes the video images into a single video stream, and outputs the video stream thus multiplexed as a compressed stream b.

It should be noted that description will be made in the present embodiment assuming that a video image in the YUV 4:4:4 format is input as the input video image a. Also, description will be made in the present embodiment assuming that the video encoding apparatus AA generates, as the video images that conform to the two respective video formats, a video image (upper layer) that conforms to the YUV 4:4:4 format and a video image (lower layer) that conforms to the YUV 4:2:2 format or otherwise the YUV 4:2:0 format. That is to say, the video image employed as the lower layer is configured as a video image in the same format as the input video image and also in a video format having a smaller amount of color information than that of the input video image a.

Also, description will be made in the present embodiment regarding an arrangement in which prediction encoding is performed for an enhancement layer using the decoded pixel values of a base layer. Such an arrangement requires only the decoded pixel values as the information with respect to the base layer. Thus, known standard formats (e.g., H246, MPEG-2, etc.) can be used to encode the base layer

The video encoding apparatus AA includes a first upper layer encoding unit 10, a second upper layer encoding unit 20, a lower layer encoding unit 30, and a stream MUX unit 40.

The stream MUX unit 40 receives, as inputs, encoded information c with respect to the U component and V component of the upper layer output from the first upper layer encoding unit 10 as described later, encoded information d with respect to the Y component of the upper layer output from the second upper layer encoding unit 20 as described later, and encoded information e with respect to the lower layer output from the lower layer encoding unit 30 as described later. The stream MUX unit 40 multiplexes the information thus input into a single compressed stream b using a method defined beforehand in the standard specifications or the like, and outputs the compressed stream b thus multiplexed.

### [Configuration and operation of first upper layer encoding unit 10]

Fig. 2 is a block diagram showing a configuration of the first upper layer encoding unit 10. The first upper layer encoding unit 10 includes a color information scalable prediction unit 11, a predicted value generating unit 12, a DCT/quantization unit 13, an inverse DCT/inverse quantization unit 14, an entropy encoding unit 15, and local memory 16.

The color information scalable prediction unit 11 receives, as inputs, a Y-component local decoded video image f configured as an upper layer output from the second upper layer encoding unit 20 as described later, and a local decoded video image g configured as a lower layer output from the lower layer encoding unit 30 as described later. The color information scalable prediction unit 11 generates a predicted value h for each of the U and V components of the upper layer by means of linear processing, interpolation filtering processing, or non-linear processing, based on the information with respect to the Y-component decoded pixel values of the upper layer and the information with respect to the Y-component decoded pixel values of the lower layer.

First, description will be made regarding an arrangement in which the color information scalable prediction unit 11 performs the aforementioned linear processing. In this case, the color information scalable prediction unit 11 estimates a polynomial expression configured as a linear function which approximately represents the Y-component values of the (S x T) pixels (S represents an integer that is equal to or greater than 1, and T represents an integer that is equal to or greater than 1) in the vicinity of a given processing target pixel with that processing target pixel as the center. Subsequently, the color information scalable prediction unit 11 applies the polynomial expression thus acquired to the U-component pixel values and V-component pixel values of the (S x T) pixels in the vicinity of such a given processing target pixel, so as to acquire a predicted value h for each of the U-component pixel value and the V-component pixel value of the processing target pixel.

Next, description will be made regarding an arrangement in which the color information scalable prediction unit 11 performs the aforementioned interpolation filtering processing. In this case, the color information scalable prediction unit 11 calculates a filter coefficient that provides the Y-component pixel value for a given processing target pixel with a minimum filtering error based on the Y-component values of the (S x T) pixels in the vicinity of the processing target pixel with that processing target pixel as the center. Subsequently, the color information scalable prediction unit 11 applies the filter coefficient thus acquired to the U-component pixel values and V-component pixel values of the (S x T) pixels in the vicinity of such a processing target pixel, so as to acquire a predicted value h for each of the U-component pixel value and the V-component pixel value of the processing target pixel.

Next, description will be made regarding an arrangement in which the color information scalable prediction unit 11 performs the aforementioned non-linear processing. In this case, the color information scalable prediction unit 11 generates the predicted value of the Y-component of the processing target pixel by means of nonlinear processing such as median filtering, rank filtering, or the like, and calculates the difference between the pixel value of the Y-component of the processing target pixel and the predicted value thereof. Furthermore, the color information scalable prediction unit 11 generates the predicted value for each of the U component and the V component of the processing target pixel by means of nonlinear processing such as median filtering, rank filtering, or the like, based on the pixel values of the U component and the V component of the (S x T) pixels in the vicinity of the processing target pixel with that processing target pixel as the center. Subsequently, the color information scalable prediction unit 11 calculates a scaling value for the difference between the Y-component pixel value and the predicted value based on the display bit depth of each of the Y, U, V components. Furthermore, the color information scalable prediction unit 11 adds the scaling value to the predicted value thus calculated for each of the U and V components, and uses the calculation results as the predicted values h for the U and V components of the processing target pixel.

The predicted value generating unit 12 receives, as inputs, the U and V components of the input video image a, the predicted value h of the U and V components of the upper layer, and the local decoded video image i of the U and V components output from the local memory 16. The predicted value generating unit 12 generates a predicted value j based on the input information using a prediction method selected as the highest-efficiency prediction method from among the prediction methods prepared beforehand. Furthermore, the predicted value generating unit 12 outputs the predicted value j, and outputs, as prediction information k, the information which indicates the estimation method used to generate the predicted value j.

The DCT/quantization unit 13 receives the difference information between the input video image and the predicted value j as input. The DCT/quantization unit 13 performs DCT processing of the difference information thus input, quantizes the DCT coefficients, and outputs the quantized DCT coefficients m.

The inverse DCT/inverse quantization unit 14 receives the quantized DCT coefficients m as inputs. The inverse DCT/inverse quantization unit 14 performs inverse quantization of the quantized DCT coefficients m thus input, performs inverse DCT processing of the coefficients thus subjected to inverse quantization, and outputs the calculation result as difference information n subjected to inverse quantization and inverse DCT.

The entropy encoding unit 15 receives the quantized DCT coefficients m and the prediction information k as inputs. The entropy encoding unit 15 encodes the input information by means of variable-length coding or arithmetic coding, and outputs the information thus encoded as encoded information c with respect to the U and V components of the upper layer.

The local memory 16 receives a local decoded video image as input. The local decoded video image input to the local memory 16 is configured as the sum of the predicted value j and the difference information n subjected to inverse DCT and inverse quantization. The local memory 16 stores the local decoded video image thus input, and outputs, as appropriate, the local decoded video image thus stored as the local decoded video image i of the U and V components of the upper layer.

### [Configuration and operation of second upper layer encoding unit 20]

Fig. 3 is a block diagram showing a configuration of the second upper layer encoding unit 20. The second upper layer encoding unit 20 includes a predicted value generating unit 22, a DCT/quantization unit 23, an inverse DCT/inverse quantization unit 24, an entropy encoding unit 25, and local memory 26.

The predicted value generating unit 22 receives, as inputs, the Y component of the input video image a, the Y-component local decoded video image f of the upper layer output from the local memory 26 as described later, and the local decoded video image g of the lower layer output from the lower layer encoding unit 30 as described later. The predicted value generating unit 22 generates a predicted value p based on the input information using a prediction method selected as the highest-efficiency prediction method from among the prediction methods prepared beforehand. Furthermore, the predicted value generating unit 22 outputs the predicted value p, and outputs, as prediction information q, the information which indicates the prediction method used to generate the predicted value p.

The DCT/quantization unit 23 receives the difference information between the input video image and the predicted value p as inputs. The DCT/quantization unit 23 performs DCT processing of the difference information thus input, quantizes the DCT coefficients, and outputs the quantized DCT coefficients r.

The inverse DCT/inverse quantization unit 24 receives the quantized DCT coefficients r as inputs. The inverse DCT/inverse quantization unit 24 performs inverse quantization of the quantized DCT coefficients r thus input, performs inverse DCT processing of the coefficients thus subjected to inverse quantization, and outputs the calculation result as difference information s subjected to inverse quantization and inverse DCT.

The entropy encoding unit 25 receives the quantized DCT coefficients r and the prediction information q as inputs. The entropy encoding unit 25 encodes the input information by means of variable-length coding or arithmetic coding, and outputs the information thus encoded as encoded information d with respect to the Y component of the upper layer.

The local memory 26 receives a local decoded video image as input. The local decoded video image input to the local memory 26 is configured as the sum of the predicted value p and the difference information s subjected to inverse DCT and inverse quantization. The local memory 26 stores the local decoded video image thus input, and outputs, as appropriate, the local decoded video image thus stored as the local decoded video image f of the Y component of the upper layer.

### [Configuration and operation of lower layer encoding unit 30]

Fig. 4 is a block diagram showing a configuration of a lower layer encoding unit 30. The lower layer encoding unit 30 includes a predicted value generating unit 32, a DCT/quantization unit 33, an inverse DCT/inverse quantization unit 34, an entropy encoding unit 35, local memory 36, and a color information sampling unit 37.

The color information sampling unit 37 receives the input video image a as input. The color information sampling unit 37 generates a video image obtained by subsampling the color information with respect to the input video image a, and outputs the video image thus generated as a lower layer video image x. Specifically, in the present embodiment, the input video image is configured as a video image in the YUV 4:4:4 format. Thus, the color information sampling unit 37 outputs, as the lower layer video image x, a video image in the YUV 4:2:2 format or otherwise a video image in the YUV 4:2:0 format.

The predicted value generating unit 32 receives, as inputs, the lower layer video image x and a lower layer local decoded video image g output from the local memory 36 as described later. The predicted value generating unit 32 generates a predicted value t based on the input information using a prediction method selected as the highest-efficiency prediction method from among the prediction methods prepared beforehand. Furthermore, the predicted value generating unit 32 outputs the predicted value t, and outputs, as prediction information u, the information which indicates the prediction method used to generate the predicted value t.

The DCT/quantization unit 33 receives the difference information between the video image x of the lower layer and the predicted value t as input. The DCT/quantization unit 33 performs DCT processing of the difference information thus input, quantizes the DCT coefficients, and outputs the quantized DCT coefficients v.

The inverse DCT/inverse quantization unit 34 receives the quantized DCT coefficients v as inputs. The inverse DCT/inverse quantization unit 34 performs inverse quantization of the quantized DCT coefficients v thus input, performs inverse DCT processing of the coefficients thus subjected to inverse quantization, and outputs the calculation result as difference information w subjected to inverse quantization and inverse DCT.

The entropy encoding unit 35 receives the quantized DCT coefficients v and the prediction information u as inputs. The entropy encoding unit 35 encodes the input information by means of variable-length coding or arithmetic coding, and outputs the information thus encoded as encoded information e with respect to the lower layer.

The local memory 36 receives a local decoded video image as input. The local decoded video image input to the local memory 36 is configured as the sum of the predicted value t and the difference information w subjected to inverse DCT and inverse quantization. The local memory 36 stores the local decoded video image thus input, and outputs, as appropriate, the local decoded video image thus stored as the local decoded video image g of the lower layer.

### [Configuration and operation of video image decoding apparatus BB]

Fig. 5 is a block diagram showing a configuration of a video decoding apparatus BB according to a first embodiment of the present invention. The video decoding apparatus BB decodes the compressed stream b generated by the video encoding apparatus AA so as to generate an upper layer output video image A and a lower layer output video image B. The video decoding apparatus BB includes a first upper layer decoding unit 110, a second upper layer decoding unit 120, a lower layer decoding unit 130, and a stream DEMUX unit 140. The upper layer output video image A comprises a decoded image A1 with respect to the U and V components of the upper layer output from the first upper layer decoding unit 110 as described later and a decoded image A2 with respect to the Y component of the upper layer output from the second upper layer decoding unit 120 as described later.

The stream DEMUX unit 140 receives the compressed stream b as input. The stream DEMUX unit 140 extracts the encoded information with respect to the upper layer and the encoded information with respect to the lower layer. Subsequently, the stream DEMUX unit 140 outputs the encoded information C with respect to the U and V components of the upper layer to the upper layer decoding unit 110, outputs the encoded information D with respect to the Y component of the upper layer to the second upper layer decoding unit 120, and outputs the encoded information E with respect to the lower layer to the lower layer decoding unit 130.

### [Configuration and operation of first upper layer decoding unit 110]

Fig. 6 is a block diagram showing a configuration of the first upper layer decoding unit 110. The first upper layer decoding unit 110 includes an entropy decoding unit 111, a color information scalable prediction unit 112, an inverse DCT/inverse quantization unit 113, a predicted value generating unit 114, and local memory 115.

The entropy decoding unit 111 receives the encoded information C with respect to the U and V components of the upper layer as input. The entropy decoding unit 111 decodes the encoded information C by means of variable-length coding or arithmetic coding, and acquires and outputs the difference information H and the prediction information J.

The color information scalable prediction unit 112 receives, as inputs, a decoded image F of the Y component of the upper layer output from the second upper layer decoding unit 120 as described later, and a decoded image G of the lower layer output from the lower layer decoding unit 130 as described later. The color information scalable prediction unit 111 generates a predicted value K for each of the U and V components of the upper layer by means of linear processing, interpolation filtering processing, or nonlinear processing, based on the information with respect to the Y component decoded pixel values of the upper layer and the information with respect to the Y component decoded pixel values of the lower layer, in the same manner as in the color information scalable prediction unit 11 shown in Fig. 2.

The inverse DCT/inverse quantization unit 113 receives the difference information H as input. The difference information H is configured as quantized DCT coefficients. The inverse DCT/inverse quantization unit 113 performs inverse quantization of the difference information H, performs inverse DCT processing of the calculation result thus subjected to inverse quantization, and outputs the difference information L thus subjected to inverse quantization and inverse DCT.

The predicted value generating unit 114 receives, as inputs, the prediction information J, the predicted value K for each of the U and V components of the upper layer, and the decoded image M of the U and V components of the upper layer output from the local memory 115 as described later. The predicted value generating unit 114 generates the predicted value N based on the predicted value K and the decoded image M using a prediction method according to the prediction information J, and outputs the predicted value N thus generated.

The local memory 115 receives the decoded image A1 with respect to the U and V components of the upper layer as inputs. The decoded image A1 is configured as the sum of the difference information L and the predicted value N. The local memory 115 stores the decoded image A1 with respect to the U and V components of the upper layer, and outputs, as appropriate, the decoded image A1 thus stored as the decoded image M of the U and V components of the upper layer.

### [Configuration and operation of second upper layer encoding unit 120]

Fig. 7 is a block diagram showing a configuration of the second upper layer decoding unit 120. The second layer decoding unit 120 includes an entropy decoding unit 121, an inverse DCT/inverse quantization unit 123, a predicted value generating unit 124, and local memory 125.

The entropy decoding unit 121 receives the encoded information D with respect to the Y component of the upper layer as input. The entropy decoding unit 121 decodes the encoded information D by means of variable-length coding or arithmetic coding and extracts and outputs the difference information P and the prediction information Q.

The inverse DCT/inverse quantization unit 123 receives the difference information P as input. The difference information P is configured as quantized DCT coefficients. The inverse DCT/inverse quantization unit 123 performs inverse quantization of the difference information P, performs inverse DCT processing of the calculation result, and outputs the difference information R thus subjected to inverse quantization and inverse DCT.

The predicted value generating unit 124 receives, as inputs, the prediction information Q, the decoded image G of the lower layer, and the decoded image F of the Y component of the upper layer output from the local memory 125 as described later. The predicted value generating unit 124 generates a predicted value S based on the decoded images F and G using a prediction method according to the prediction information Q, and outputs the predicted value S thus generated.

The local memory 125 receives the decoded image A2 with respect to the Y component of the upper layer as input. The decoded image A2 with respect to the Y component of the upper layer is configured as the sum of the difference information R and the predicted value S. The local memory 125 stores the decoded image A2 with respect to the Y component of the upper layer, and outputs, as appropriate, the decoded image A2 thus stored as the decoded image F of the Y component of the upper layer.

### [Configuration and operation of lower layer decoding unit 130]

Fig. 8 is a block diagram showing a configuration of the lower layer decoding unit 130. The lower layer decoding unit 130 includes an entropy decoding unit 131, an inverse DCT/inverse quantization unit 133, a predicted value generating unit 134, and local memory 135.

The entropy decoding unit 131 receives the encoded information E with respect to the lower layer as input. The entropy decoding unit 131 decodes the encoded information E by means of variable-length coding or arithmetic coding, and extracts and outputs the difference information T and the prediction information U.

The inverse DCT/inverse quantization unit 133 receives the difference information T as input. The difference information T is configured as quantized DCT coefficients. The inverse DCT/inverse quantization unit 133 performs inverse quantization of the difference information T, performs inverse DCT processing of the calculation result, and outputs the difference information V thus subjected to inverse quantization and inverse DCT.

The predicted value generating unit 134 receives, as inputs, the prediction information U and the decoded image G of the lower layer output from the local memory 135 as described later. The predicted value generating unit 134 generates a predicted value W based on the decoded image G using a prediction method according to the prediction information U, and outputs the predicted value W thus generated.

The local memory 135 receives the output video image B of the lower layer as input. The output video image B of the lower layer is configured as the sum of the difference information V and the predicted value W. The local memory 135 stores the output video image B of the lower layer, and outputs, as appropriate, the output video image B thus stored as the decoded image G of the lower layer.

The video encoding apparatus AA described above provides the following advantages.

It is known that there is a correlation in the change in the pixel value of a video image between the luminance and the color information. Thus, the video encoding apparatus AA performs inter-layer prediction based on inter-color-component prediction using the correlation between the luminance and the color information. This allows the color information with respect to the upper layer to be predicted with high precision using the video image of the lower layer. Thus, in a case in which there is a difference in the video format between the video image of the upper layer (video image in YUV 4:4:4 format) and the video image of the lower layer (video image in YUV 4:2:2 format or otherwise YUV 4:2:0 format), and they have the same image pattern, such an arrangement is capable of compressing these video images into a single compressed stream b with high efficiency. Thus, in a case in which the lower layer is configured in a video format for broadcasting and the upper layer is configured in a video format for image elements, for example, such an arrangement is capable of compressing these layers with high efficiency.

It should be noted that, with the video encoding apparatus AA, the upper layer may have information for compensating for image degradation that can occur in the lower layer with respect to a color component converted into the same video format for the upper layer and the lower layer (SNR scalability).

The video decoding apparatus BB described above provides the following advantages.

The video decoding apparatus BB performs inter-layer prediction based on inter-color-component prediction using the correlation between the luminance and the color information. This allows the color information with respect to the upper layer to be predicted with high precision using the video image of the lower layer. Thus, the video decoding apparatus BB is capable of generating an upper layer output video image A and a lower layer output video image B having different video formats by decoding a single compressed stream b.

### [Second embodiment]

### [Configuration and operation of video encoding apparatus CC]

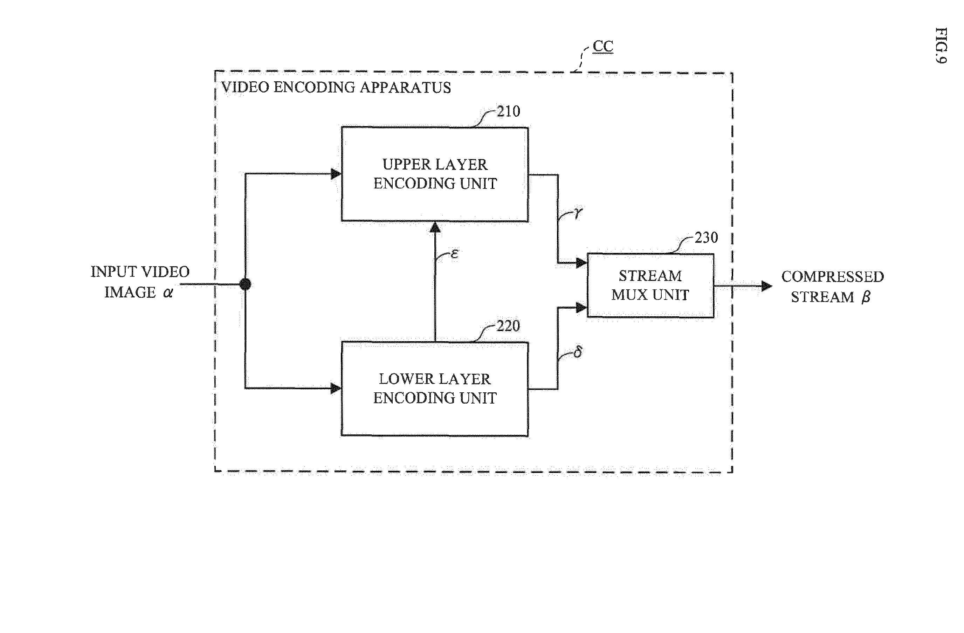

Fig. 9 is a block diagram showing a configuration of a video encoding apparatus CC according to a second embodiment of the present invention. The video encoding apparatus CC generates video images in two video formats based on an input video image α, multiplexes the video images into a single video stream, and outputs the video stream thus multiplexed as a compressed stream β.

It should be noted that description will be made in the present embodiment assuming that a video image in an RGB format is input as the input image α. Also, description will be made in the present embodiment assuming that the video encoding apparatus CC generates, as the video images that conform to the two video formats, a video image (upper layer) in the RGB format and a video image (lower layer) in the YUV 4:2:0 format. That is to say, there is a difference in the format between the input image α and the video image of the lower layer. Furthermore, the video image of the lower layer is configured in a video format such that the data amount per pixel of the video image of the lower layer is smaller than that of the input video image α.

Also, description will be made in the present embodiment regarding an arrangement in which the number of bits for representing the upper layer is the same as that for representing the lower layer.

The video encoding apparatus CC includes an upper layer encoding unit 210, a lower layer encoding unit 220, and a stream MUX unit 230.

The stream MUX unit 230 receives, as inputs, encoded information γ with respect to the upper layer output from the upper layer encoding unit 210 as described later and encoded information δ with respect to the lower layer output from the lower layer encoding unit 220 as described later. The stream MUX unit 230 multiplexes the information thus input into a single compressed stream P using a method defined beforehand in the standard specifications or the like, and outputs the compressed stream P thus multiplexed.

### [Configuration and operation of upper layer encoding unit 210]

Fig. 10 is a block diagram showing a configuration of the upper layer encoding unit 210. The upper layer encoding unit 210 includes a color format converting unit 211, a color predicted value generating unit 212, a predicted value generating unit 213, a DCT/quantization unit 214, an inverse DCT/inverse quantization unit 215, an entropy encoding unit 216, and local memory 217.

The predicted value generating unit 213, the DCT/quantization unit 214, the inverse DCT/inverse quantization unit 215, the entropy encoding unit 216, and the local memory 217 respectively operate in the same manner as in the predicted value generating unit 12, the DCT/quantization unit 13, the inverse DCT/inverse quantization unit 14, the entropy encoding unit 15, and the local memory 16 shown in Fig. 2.

The color format converting unit 211 receives a local decoded video image ε of the lower layer as input. Here, the local decoded video image ε of the lower layer is configured as a video image in a YUV format. Thus, the color format converting unit 211 generates the weighted sum of each of the pixel values of the Y component, U component, and V component of the local decoded video image ε of the lower layer, so as to generate the pixel value for each of the R component, G component, and B component, thereby outputting a video image ζ converted into an RGB format.

The color predicted value generating unit 212 receives the converted video image ζ as input. The color predicted value generating unit 212 selects one of the components of the RGB video image, and generates the predicted values of the remaining two components using the selected component as a reference.

In the YUV format and the RGB format, it is known that the Y component and the G component are important components for the sense of sight, and that the Y component and the G component have approximately the same amount of information. That is to say, there is a pairwise relationship between the Y component and the G component. Accordingly, description will be made in the present embodiment regarding an arrangement in which the G component is used as a reference. With such an arrangement, the color predicted value generating unit 212 uses the G component as a substitute for the Y component as used by the information scalable prediction unit 11 shown in Fig. 2, to predict the R and B components in the same way as the color information scalable prediction unit 11 which generates the predicted value h for each of the U and V components. Subsequently, the color predicted value generating unit 212 outputs the predicted value of the reference color component (G component) selected for the upper layer and the predicted values of the remaining components (R and B components) as predicted information η.

### [Configuration and operation of lower layer encoding unit 220]

Fig. 11 is a block diagram showing a configuration of the lower layer encoding unit 220. The lower layer encoding unit 220 includes a predicted value generating unit 221, a DCT/quantization unit 222, an inverse DCT/inverse quantization unit 223, an entropy encoding unit 224, local memory 225, and a color format converting unit 226.

The predicted value generating unit 221, the DCT/quantization unit 222, the inverse DCT/inverse quantization unit 223, the entropy encoding unit 224, and the local memory 225 respectively operate in the same manner as the predicted value generating unit 32, the DCT/quantization unit 33, the inverse DCT/inverse quantization unit 34, the entropy encoding unit 35, and the local memory 36 shown in Fig. 4.

The color format converting unit 226 receives an input video image α as input. Here, the input video image α is configured as a video image in the RGB format. Thus, the color format converting unit 226 generates the weighted sum of the R component, G component, and B component of the input video image α, so as to generate the pixel value for each of the Y component, U component, and V component, and outputs the pixel values thus generated as a video image θ converted into the YUV format.

### [Configuration and operation of video image decoding apparatus DD]

Fig. 12 is a block diagram showing a configuration of a video decoding apparatus DD according to a second embodiment of the present invention. The video decoding apparatus DD decodes the compressed stream P generated by the video encoding apparatus CC so as to generate an upper layer output video image κ and a lower layer output video image κ. The video decoding apparatus DD includes an upper layer decoding unit 310, a lower layer decoding unit 320, and a stream DEMUX unit 330.

The stream DEMUX unit 330 receives the compressed stream β as input. The stream DEMUX unit 330 extracts, from the compressed stream β, the encoded information ν with respect to the upper layer and the encoded information ξ with respect to the lower layer. Subsequently, the stream DEMUX unit 330 outputs the encoded information ν with respect to the upper layer to the upper layer decoding unit 310. Furthermore, the stream DEMUX unit 330 outputs the encoded information ξ with respect to the lower layer to the lower layer decoding unit 320.

### [Configuration and operation of upper layer decoding unit 310]

Fig. 13 is a block diagram showing a configuration of the upper layer decoding unit 310. The upper layer decoding unit 310 includes an entropy decoding unit 311, a color format converting unit 312, a color predicted value generating unit 313, an inverse DCT/inverse quantization unit 314, a predicted value generating unit 315, and local memory 316.

The entropy decoding unit 311, the inverse DCT/inverse quantization unit 314, the predicted value generating unit 315, and the local memory 316 respectively operate in the same manner as the entropy decoding unit 111, the inverse DCT/inverse quantization unit 113, the predicated value generating unit 114, and the local memory 115 shown in Fig. 6.

The color format converting unit 312 receives, as input, a decoded image µ of the lower layer output from the lower layer decoding unit 320 as described later. Here, the decoded image µ of the lower layer is configured as a video image in the YUV format. Thus, the color format converting unit 312 generates the weighted sum of the pixel values of the Y component, U component, and V component of the decoded image µ of the lower layer, so as to generate each of the R component, G component, and B component, thereby outputting a decoded image n of the lower layer converted into the RGB format.

The color predicted value generating unit 313 receives the decoded image π of the lower layer as input. The color predicted value generating unit 313 generates the color predicted values in the same way as the color predicted value generating unit 212 shown in Fig. 10. Subsequently, the color predicted value generating unit 313 outputs the predicted value of the reference color component (G component) selected for the lower layer and the predicted values of the remaining components (R and B components) as the predicted value information ρ.

### [Configuration and operation of lower layer decoding unit 320]

Fig. 14 is a block diagram showing a configuration of the lower layer encoding unit 320. The lower layer decoding unit 320 includes an entropy decoding unit 321, an inverse DCT/inverse quantization unit 322, a predicted value generating unit 323, and local memory 324.

The entropy decoding unit 321, the inverse DCT/inverse quantization unit 322, the predicted value generating unit 323, and the local memory 324 respectively operate in the same manner as the entropy decoding unit 131, the inverse DCT/inverse quantization unit 133, the predicted value generating unit 134, and the local memory 135 shown in Fig. 8.

The video encoding apparatus CC described above provides the following advantages.

As described above, there is a pairwise relationship between the Y component in the YUV format and the G component in the RGB format. Thus, the video encoding apparatus CC performs inter-layer prediction based on the inter-color-component prediction using the pairwise relationship between the Y component and the G component. This allows the video image of the upper layer to be predicted with high precision based on the video image of the lower layer. Thus, in a case in which there is a difference in the video format between the video image of the upper layer (video image in the RGB format) and the video image of the lower layer (video image in the YUV format), and they have the same image pattern, such an arrangement is capable of compressing these video images into a single compressed stream P with high efficiency. Thus, in a case in which the lower layer is configured in a video format for broadcasting and the upper layer is configured in a video format for image elements, for example, such an arrangement is capable of compressing these layers with high efficiency.

It should be noted that, with the video encoding apparatus CC, the upper layer may have information for compensating for image degradation that can occur in the lower layer with respect to a color component converted into the same video format for the upper layer and the lower layer (SNR scalability).

The video decoding apparatus DD described above provides the following advantages.

The video decoding apparatus DD performs inter-layer prediction based on the inter-color-component prediction using the pairwise relationship between the Y component and the G component. This allows the video image of the upper layer to be predicted with high precision based on the video image of the lower layer. Thus, such an arrangement is capable of generating the upper layer output video image κ and the lower layer output video image λ in different video formats by decoding the single compressed stream β.

It should be noted that the operation of the video encoding apparatus AA or CC or the operation of the video decoding apparatus BB or DD may be recorded on a computer-readable recording medium which is not a temporary recording medium, and the video encoding apparatus AA or CC or the operation of the video decoding apparatus BB or DD may read out and execute the programs recorded on the recording medium, which provides the present invention.

Here, examples of the aforementioned recording medium include nonvolatile memory such as EPROM, flash memory, and the like, a magnetic disk such as a hard disk, and CD-ROM and the like. Also, the programs recorded on the recording medium may be executed by a processor provided to the video encoding apparatus AA or CC or a processor provided to the video decoding apparatus BB or DD.

Also, the aforementioned program may be transmitted from the video encoding apparatus AA or CC or the video decoding apparatus BB or DD, which stores the program in a storage device or the like, to another computer system via a transmission medium or transmission wave in a transmission medium. The term "transmission medium" as used here represents a medium having a function of transmitting information, examples of which include a network (communication network) such as the Internet, etc., and a communication link (communication line) such as a phone line, etc.

Also, the aforementioned program may be configured to provide a part of the aforementioned functions. Also, the aforementioned program may be configured to provide the aforementioned functions in combination with a different program already stored in the video encoding apparatus AA or CC or the video decoding apparatus BB or DD. That is to say, the aforementioned program may be configured as a so-called differential file (differential program).

Detailed description has been made above regarding the embodiments of the present invention with reference to the drawings. However, the specific configuration thereof is not restricted to the above-described embodiments. Rather, any modifications may be made without departing from the spirit of the present invention.

For example, description has been made above in the first embodiment regarding an arrangement in which the input video image is configured in the YUV 4:4:4 format. However, the present invention is not restricted to such an arrangement. Also, a video image in the YUV 4:2:2 format may be input as the input video image a. In a case in which a video image in the YUV 4:2:2 format is input as the input video image a, the color information sampling unit 37 shown in Fig. 4 generates a video image in the YUV 4:2:0 format.

Description has been made above in the first embodiment regarding an arrangement in which each video image has two layers, i.e., the upper layer and the lower layer. However, the present invention is not restricted to such an arrangement. Also, the present invention is applicable to an arrangement in which each video image has three or four layers. In a case in which each video image has three or more layers, the upper layers may be sequentially encoded or otherwise decoded based on the lower layers, in the same way as in the first embodiment.

Also, in the first embodiment described above, when the difference between the Y component of the input video image a and the Y component of the local decoded video image g of the lower layer is smaller than a predetermined threshold value, the predicted value generating unit 22 may output the same value as that of the input video image a as the predicted value p. With such an arrangement, when the local decoded video image g of the lower layer has a sufficiently high image quality, the local decoded video image g of the lower layer is used as the Y component of the upper layer. In this case, the difference information between the input video image a and the predicted value p input to the DCT/quantization unit 23 is zero, and accordingly, the entropy encoding unit 25 encodes only the prediction information q. Furthermore, with such an arrangement, the video decoding apparatus BB does not require additional information and is not required to perform an additional operation for the compressed stream b thus generated.

Description has been made above in the second embodiment regarding an arrangement in which the number of bits for representing the upper layer is the same as the number of bits for representing the lower layer. However, the present invention is not restricted to such an arrangement. Also, there may be a difference between the number of bits for representing the upper layer and the number of bits for representing the lower layer. For example, by raising the number of bits for representing the layer in the operation in which the upper layer is predicted based on the lower layer, such an arrangement provides scalability with respect to the number of bits for representing the layer in such a video format layer structure in which the bits for representing the upper layer include the bits for representing the lower layer.

Description has been made above in the first embodiment regarding an arrangement in which the present invention is applied to the scalability between video images each configured in a YUV format. Also, description has been made above in the second embodiment regarding an arrangement in which the present invention is applied to the scalability between a video image configured in an RGB format and a video image configured in a YUV format. However, the present invention is not restricted to such arrangements. Also, the present invention is applicable to an arrangement configured to provide scalability between video images configured in other color space formats such as a Lab format, CMYK format, or the like.

### Reference Numerals

- 10: first upper layer encoding unit
- 20: second upper layer encoding unit
- 30, 220: lower layer encoding unit
- 40, 230: stream MUX unit
- 110: first upper layer decoding unit
- 120: second upper layer decoding unit
- 130, 320: lower layer decoding unit
- 140, 330: stream DEMUX unit
- 210: upper layer encoding unit
- 310: upper layer decoding unit
- AA, CC: video encoding apparatus
- BB, DD: video decoding apparatus

## Claims

1. A video encoding apparatus which is capable of performing scalable encoding of an input video image, the video encoding apparatus comprising:
a video format converting unit that converts the input video image into a video image in a video format that differs from a video format of the input video image, so as to generate a converted video image;
an encoding-side prediction unit that predicts information lost in an operation of the video format converting unit for generating the converted video image;
a first encoding unit that encodes the input video image based on a prediction result obtained by the encoding-side prediction unit;
a second encoding unit that encodes the converted video image generated by the video format converting unit; and
a multiplexing unit that multiplexes an encoded result obtained by the first encoding unit and an encoded result obtained by the second encoding unit so as to generate compressed data having scalability with respect to the video format.

2. The video encoding apparatus according to Claim 1, wherein the video format converting unit generates, as the converted video image, a video image in the same format as that of the input video image and in a video format having a smaller amount of color information than that of the input video image.

3. The video encoding apparatus according to Claim 2, wherein the first encoding unit encodes a base layer using an existing standard method,
and wherein the encoding-side prediction unit predicts the lost color information based on pixel values of a luminance component of a decoded image of the base layer.

4. The video encoding apparatus according to Claim 3, wherein the encoding-side prediction unit generates a predicted value of a color difference component lost in an operation of the video format converting unit for generating the converted video image based on the input video image, by means of polynomial approximation using pixel values of a luminance component of a decoded image of the input video image and pixel values of a luminance component of a decoded image of the converted video image.

5. The video encoding apparatus according to Claim 3, wherein the encoding-side prediction unit generates a predicted value of a color difference component lost in an operation of the video format converting unit for generating the converted video image based on the input video image, by means of an interpolation filter that provides a minimum error in processing target pixel values using pixel values of a luminance component of a decoded image of the input video image and pixel values of a luminance component of a decoded image of the converted video image.

6. The video encoding apparatus according to Claim 3, wherein the encoding-side prediction unit generates a predicted value of a color difference component lost in an operation of the video format converting unit for generating the converted video image based on the input video image, by means of nonlinear interpolation processing using pixel values of a luminance component of a decoded image of the input video image and pixel values of a luminance component of a decoded image of the converted video image.

7. The video encoding apparatus according to Claim 1, wherein the video format converting unit generates, as the converted video image, a video image in a format that differs from that of the input video image, and in a video format having a smaller amount of data per pixel than that of the input video image.

8. The video encoding apparatus according to Claim 7, wherein the first encoding unit encodes a base layer using an existing standard method,
and wherein the encoding-side prediction unit predicts the lost information based on pixel values of one component from among a plurality of components that form a decoded image of the base layer.

9. The video encoding apparatus according to Claim 8, wherein there is a pairwise relationship between a particular component that is one component from among a plurality of components that form a decoded image of the input video image and a predetermined component that is one component from among a plurality of components that form a decoded image of the converted video image,
and wherein the encoding-side prediction unit generates a predicted value of a component lost in an operation of the video format converting unit for generating the converted video image based on the input video image, by means of polynomial approximation using pixel values of the particular component of a decoded image of the input video image and pixel values of the predetermined component of a decoded image of the converted video image.

10. The video encoding apparatus according to Claim 8, wherein there is a pairwise relationship between a particular component that is one component from among a plurality of components that form a decoded image of the input video image and a predetermined component that is one component from among a plurality of components that form a decoded image of the converted video image,
and wherein the encoding-side prediction unit generates a predicted value of a component lost in an operation of the video format converting unit for generating the converted video image based on the input video image, by means of an interpolation filter that provides a minimum error in processing target pixel values using pixel values of the particular component of a decoded image of the input video image and pixel values of the predetermined component of a decoded image of the converted video image.

11. The video encoding apparatus according to Claim 8, wherein there is a pairwise relationship between a particular component that is one component from among a plurality of components that form a decoded image of the input video image and a predetermined component that is one component from among a plurality of components that form a decoded image of the converted video image,
and wherein the encoding-side prediction unit generates a predicted value of a component lost in an operation of the video format converting unit for generating the converted video image based on the input video image, by means of nonlinear interpolation processing using pixel values of the particular component of a decoded image of the input video image and pixel values of the predetermined component of a decoded image of the converted video image.

12. A video decoding apparatus which is capable of performing scalable decoding of compressed data generated by the video encoding apparatus according to any one of Claims 1 through 6, the video decoding apparatus comprising:
a demultiplexing unit that acquires an encoded result of a video image for each video format from the compressed data;
a decoding unit that decodes the encoded result acquired for each video format by the demultiplexing unit;
a decoding-side prediction unit that predicts information lost in an operation of the video format converting unit for generating the converted video image based on the input video image;
a first video output unit that calculates the input video image based on a video image decoded by the decoding unit and a prediction result obtained by the decoding-side prediction unit; and
a second video output unit that calculates the converted video image based on a video image decoded by the decoding unit.

13. The video decoding apparatus according to Claim 12, wherein the decoding unit decodes an encoded result of the base layer encoded using an existing standard method and decodes an encoded result of an enhancement layer, which is acquired by the demultiplexing unit from encoded results as a layer that differs from the base layer,
and wherein the decoding-side prediction unit predicts the lost color information based on pixel values of a luminance component of a decoded image of the base layer.

14. The video decoding apparatus according to Claim 13, wherein the decoding-side prediction unit generates a predicted value of a color difference component lost in an operation of the video format converting unit for generating the converted video image based on the input video image, by means of polynomial approximation using pixel values of a luminance component of a decoded image of the base layer and pixel values of a luminance component of a decoded image of the enhancement layer.

15. The video decoding apparatus according to Claim 13, wherein the decoding-side prediction unit generates a predicted value of a color difference component lost in an operation of the video format converting unit for generating the converted video image based on the input video image, by means of an interpolation filter that provides a minimum error in processing target pixel values using pixel values of a luminance component of a decoded image of the base layer and pixel values of a luminance component of a decoded image of the enhancement layer.

16. The video decoding apparatus according to Claim 13, wherein the decoding-side prediction unit generates a predicted value of a color difference component lost in an operation of the video format converting unit for generating the converted video image based on the input video image, by means of nonlinear interpolation processing using pixel values of a luminance component of a decoded image of the base layer and pixel values of a luminance component of a decoded image of the enhancement layer.

17. A video decoding apparatus which is capable of performing scalable decoding of compressed data generated by the video encoding apparatus according to any one of Claim 1 and Claims 7 through 11, the video decoding apparatus comprising:
a demultiplexing unit that acquires an encoded result of a video image for each video format from the compressed data;
a decoding unit that decodes the encoded result acquired for each video format by the demultiplexing unit;
a decoding-side prediction unit that predicts information lost in an operation of the video format converting unit for generating the converted video image based on the input video image;
a first video output unit that calculates the input video image based on a video image decoded by the decoding unit and a prediction result obtained by the decoding-side prediction unit; and
a second video output unit that calculates the converted video image based on a video image decoded by the decoding unit.

18. The video decoding apparatus according to Claim 17, wherein the decoding unit decodes an encoded result of the base layer encoded using an existing standard method and decodes an encoded result of an enhancement layer, which is acquired by the demultiplexing unit from encoded results as a layer that differs from the base layer,
and wherein the decoding-side prediction unit predicts the lost information based on pixel values of the particular component of a decoded image of the base layer.

19. The video decoding apparatus according to Claim 18, wherein the decoding-side prediction unit generates a predicted value of a component lost in an operation of the video format converting unit for generating the converted video image based on the input video image, by means of polynomial approximation using pixel values of the particular component of a decoded image of the base layer and pixel values of the predetermined component of a decoded image of the enhancement layer.

20. The video decoding apparatus according to Claim 18, wherein the decoding-side prediction unit generates a predicted value of a component lost in an operation of the video format converting unit for generating the converted video image based on the input video image, by means of an interpolation filter that provides a minimum error in processing target pixel values using pixel values of the particular component of a decoded image of the base layer and pixel values of the predetermined component of a decoded image of the enhancement layer.

21. The video decoding apparatus according to Claim 18, wherein the decoding-side prediction unit generates a predicted value of a component lost in an operation of the video format converting unit for generating the converted video image based on the input video image, by means of nonlinear interpolation processing using pixel values of the particular component of a decoded image of the base layer and pixel values of the predetermined component of a decoded image of the enhancement layer.

22. A video encoding method used by a video encoding apparatus comprising a video format converting unit, an encoding-side prediction unit, a first encoding unit, a second encoding unit, and a multiplexing unit, and configured to be capable of performing scalable encoding of an input video image, wherein the video encoding method comprises:
a first step in which the video format converting unit converts the input video image into a video image in a video format that differs from a video format of the input video image, so as to generate a converted video image;
a second step in which the encoding-side prediction unit predicts information lost in an operation of the video format converting unit for generating the converted video image;
a third step in which the first encoding unit encodes the input video image using a predicted result obtained by the encoding-side prediction unit;
a fourth step in which the second encoding unit encodes a video image converted by the video format converting unit; and
a fifth step in which the multiplexing unit multiplexes an encoded result obtained by the first encoding unit and an encoded result obtained by the second encoding unit, so as to generate compressed data having scalability with respect to the video format.

23. A video decoding method used by a video decoding apparatus comprising a demultiplexing unit, a decoding unit, a decoding-side prediction unit, a first video output unit, and a second video output unit, and configured to be capable of performing scalable decoding of compressed data generated by the video encoding apparatus according to Claim 22, the video decoding method comprising:
a sixth step in which the demultiplexing unit acquires a video encoded result for each video format from the compressed data;
a seventh step in which the decoding unit decodes the encoded result for each video format acquired by the demultiplexing unit;
an eighth step in which the decoding-side prediction unit predicts information lost in an operation of the video format converting unit for generating the converted video image based on the input video image;
a ninth step in which the first video output unit calculates the input video image based on a video image decoded by the decoding unit and a predicted result obtained by the decoding-side prediction unit; and
a tenth step in which the second video output unit calculates the converted video image based on a video image decoded by the decoding unit.

24. A computer program configured to instruct a computer to execute a video encoding method used by a video encoding apparatus comprising a video format converting unit, an encoding-side prediction unit, a first encoding unit, a second encoding unit, and a multiplexing unit, and configured to be capable of performing scalable encoding of an input video image, wherein the video encoding method comprises:
a first step in which the video format converting unit converts the input video image into a video image in a video format that differs from a video format of the input video image, so as to generate a converted video image;
a second step in which the encoding-side prediction unit predicts information lost in an operation of the video format converting unit for generating the converted video image;
a third step in which the first encoding unit encodes the input video image using a predicted result obtained by the encoding-side prediction unit;
a fourth step in which the second encoding unit encodes a video image converted by the video format converting unit; and
a fifth step in which the multiplexing unit multiplexes an encoded result obtained by the first encoding unit and an encoded result obtained by the second encoding unit, so as to generate compressed data having scalability with respect to the video format.

25. A computer program configured to instruct a computer to execute a video decoding method used by a video decoding apparatus comprising a demultiplexing unit, a decoding unit, a decoding-side prediction unit, a first video output unit, and a second video output unit, and configured to be capable of performing scalable decoding of compressed data generated by the video encoding apparatus according to Claim 24, wherein the video decoding method comprises:
a sixth step in which the demultiplexing unit acquires a video encoded result for each video format from the compressed data;
a seventh step in which the decoding unit decodes the encoded result for each video format acquired by the demultiplexing unit;
an eighth step in which the decoding-side prediction unit predicts information lost in an operation of the video format converting unit for generating the converted video image based on the input video image;
a ninth step in which the first video output unit calculates the input video image based on a video image decoded by the decoding unit and a predicted result obtained by the decoding-side prediction unit; and
a tenth step in which the second video output unit calculates the converted video image based on a video image decoded by the decoding unit.
